# EUROPEAN PATENT SPECIFICATION

(11) **EP 2 661 513 B1**
(45) Date of publication and mention of the grant of the patent: **25.03.2015**
(21) Application number: 12700383.8
(22) Date of filing: 06.01.2012
(51) Int. Cl.: C22B 1/02, C22B 1/06, C22B 34/24, C22B 59/00, C22B 60/02, C22B 3/06, C22B 3/08

(54) **DISSOLUTION AND RECOVERY OF AT LEAST ONE ELEMENT NB OR TA AND OF AT LEAST ONE OTHER ELEMENT U OR RARE EARTH ELEMENTS FROM ORES AND CONCENTRATES**
AUFLÖSUNG UND RÜCKGEWINNUNG VON MINDESTENS EINEM ELEMENT (NB ODER TA) UND MINDESTENS EINEM ANDEREN ELEMENT (U) ODER VON SELTENERDELEMENTEN AUS ERZEN
DISSOLUTION ET RÉCUPÉRATION D'AU MOINS UN ÉLÉMENT NB OU TA ET D'AU MOINS UN AUTRE ÉLÉMENT U OU ÉLÉMENTS DES TERRES RARES ISSUS DE MINERAIS ET DE CONCENTRÉS

(30) Priority: 06.01.2011 FR 1150089
(43) Date of publication of application: 13.11.2013
(73) Proprietor: Areva Mines, 75009 Paris (FR); Eramet, 75015 Paris (FR)
(72) Inventor: AGIN, Jérôme, F-75013 Paris (FR); DURUPT, Nicolas, F-87000 Limoges (FR); GRECO, Antoine, F-75009 Paris (FR); HAMMY, Fatima, F-78320 Le Mesnil Saint Denis (FR); LAROCHE, Guillaume, F-92150 Suresnes (FR); THIRY, Jacques, F-87240 Ambazac (FR)
(74) Representative: Le Roux, Martine
(86) International application number: PCT/EP2012/050188
(87) International publication number: WO 2012/093170

(56) References cited:
- CN-B- 101 440 429
- US-A- 3 607 006
- US-A- 4 446 116
- US-A- 5 787 332
- US-B1- 7 282 187
- GUPTA C K: "EXTRACTIVE METALLURGY OF NIOBIUM, TANTALUM AND VANADIUM", INTERNATIONAL METALS REVIEW, METALS SOCIETY, LONDON, GB, vol. 29, no. 6, 1 January 1984 (1984-01-01), pages 405-444, XP000197601, ISSN: 0308-4590

## Description

The present invention relates to the treatment of ores and ore concentrates for the purpose of quantitatively extracting, from said ores or concentrates, the typical elements: niobium (Nb), tantalum (Ta), uranium (U) and rare earth elements (RE).

A subject-matter of the present invention is more particularly:
- a process for the dissolution of at least one element chosen from niobium and tantalum and of at least one other element chosen from uranium and rare earth elements present in an ore or an ore concentrate; and
- a process for the recovery of said dissolved elements.

The dissolution process of the invention provides for quantitative dissolution of niobium and/or tantalum and of uranium and/or of at least one rare earth metal (several rare earth elements are generally present and are dissolved according to the process of the invention) without the use of hydrofluoric acid, with the use of sulphuric acid under specific conditions. Said dissolution process is particularly advantageous in that it is suitable in particular for treating ores which cannot be beneficiated or can be beneficiated only to a certain extent or with difficulty by a physical treatment (for example fine and/or weathered pyrochlore ores, in particular those very rich in iron).

The dissolution process of the invention is suitable for the dissolution of all the elements identified above, assuming, very obviously, that they are present in the ore or ore concentrate treated. It is possible to speak of the dissolution of the NTURE (N for niobium, T for tantalum, U for uranium and RE for rare earth metal(s)) or of a process for the treatment of NTURE ores or ore concentrates.
- In the natural state, niobium and tantalum are often combined in complex minerals, such as pyrochlore, colombite, tantalite, colombite-tantalite (coltan) and loparite. The ores or ore concentrates comprising these minerals are also capable of including uranium and rare earth elements.

Currently, niobium is mainly produced by a pyrochlore flotation beneficiation process, combined with a pyrometallurgical treatment in an aluminothermic furnace (Minerals Engineering, Volume 14, Number 1, January 2001, pp 99-105 (7): "Kinetics of Pyrochlore Flotation from Araxa Mineral Deposits " by Oliveira J.F., Saraiva S.M., Pimenta J.S. and Oliveira A.P.A.; Mining Magazine, February 1982: "Araxa niobium mine"). Alternatives to this process, for the production of niobium and tantalum, consists essentially of attack processes by the action of hydrofluoric acid on concentrates containing chemically refractory mineral phases, such as tantalite and colombite-tantalite ("Extractive Metallurgy of Niobium (Chapter 2: Sources and their treatment procedures" by C.K. Gupta and A.K. Suri, CRC Press, London, pages 49-62)). Processes which do not resort to hydrofluoric acid, based on the use of sulphuric acid, have also been described in the literature. They generally require an acid or sulphation roasting, combined with dissolution of the niobium and/or tantalum in a highly acidic medium (H₂SO₄ > 35% weight/weight) (Patent US 3 087 809; Annual General Meeting, Montreal, April, 1964: "The production of high-purity niobium oxide from pyrochlore-perovskite concentrate", by F.J. Kelly and W.A. Gow), or a medium comprising either carboxylic acids (Patent Application CN 1 904 097; Patent US 2 481 584), or ammonium ions (Tsvetnye Metally/non-ferrous metals, 1986, Vol. 27, No. 11, pages 61-62: "Industrial tests and introduction of the sulphate extraction technology for the processing of low-grade tantalum-niobium concentrates", by A.I. Karpukhin, G.I. Il'ina, V.G. Kharlov, A.I. Usenko and Yu. G. Popov).
- As regards the uranium, it is generally extracted from the ores or ore concentrates by chemical (acid) attack, optionally carried out under pressure.
- As regards the rare earth elements, they are generally produced from monazite, bastnaesite, xenotime or loparite ores beneficiated by physical treatment and then attacked chemically. A portion of the current production of rare earth elements is thus obtained by roasting bastnaesite and loparite concentrates with sulphuric acid. An alternative process has been described in Patent Application CN 1 721 559 for specifically the recovery of rare earth elements and thorium. Said process comprises a) a calcination of a rare earth metal ore and/or rare earth metal concentrate in the presence of concentrated sulphuric acid and iron, said iron favourably playing a part, in said calcination, in the conversion of the rare earth elements and thorium to substances which are soluble in water or in a dilute acid solution, and b) a leaching with water or with dilute acid of the calcine obtained. This document of the prior art is silent with regard to the treatment of ores or ore concentrates in order to extract the niobium and/or the tantalum therefrom. It does not describe a leachate including high concentrations of iron with reference to the extraction of niobium and/or tantalum.

Patent Application CN 101 492 771 describes a process for the treatment of a Xinganite ore concentrate for the purpose of extracting lanthanum, beryllium, tantalum and niobium therefrom. Said process comprises the roasting of the concentrate in the presence of sulphuric acid and the dissolution in water of the calcine obtained. This document does not comprise any teaching with regard to the opportune presence of a high content of dissolved ferric iron in the slurry obtained. The examples provided illustrate the presence of dissolved ferric iron in said slurry at contents of 11.6 g/l (Example 1) and 1.1 g/l (Example 2) respectively (these values were calculated from the ratios by weight shown: Fe/(Nb + Ta)).

In this context, the inventors have looked for and found an attack (dissolution) process:
a) which uses conventional reagents, including sulphuric acid (and which thus does not use hydrofluoric acid); and
b) which is of high performance (the dissolution of the elements, in particular niobium and/or tantalum, is carried out quantitatively), including when it is carried out on ores which cannot be beneficiated or can be beneficiated only to a slight extent or with difficulty by a prior physical treatment.

Said process is based on the beneficial intervention of the ferric ions in the dissolution of at least one of the elements chosen from niobium and tantalum.

According to its first subject-matter, the present invention thus relates to a process for the dissolution of at least one element chosen from niobium and tantalum and of at least one other element chosen from uranium and rare earth elements, said elements being present in an ore or ore concentrate. Said process is advantageously employed for the dissolution of niobium, tantalum, uranium and rare earth elements (several rare earth elements are generally present together but the presence of just one rare earth element cannot be ruled out), present together in the ore or ore concentrate concerned. It is, however, very obviously understood that it is possible to dissolve only elements initially present in said ore or ore concentrate. It should be noted here, by the way, that the process of the invention is entirely capable of being suitable also for the dissolution of other elements of value present, such as manganese, titanium, thorium, and the like.

It should also be noted that the ore or ore concentrate treated according to the invention can very obviously consist of, respectively, a mixture of ores or a mixture of concentrates. Moreover, the starting material treated can also consist of a mixed mixture of ore(s) and concentrate(s), which a person skilled in the art will generally also describe as ore or concentrate according to its contents of elements of value. It is understood that the invention thus relates to the treatment of a starting material chosen from ores, ore concentrates and their mixtures (for the dissolution of the elements identified above in a first step and the recovery of said elements in a second step).

The ore concentrate can be of any type. It can in particular be a mineralurgical concentrate, resulting from a physical enrichment, or a concentrate resulting from a chemical enrichment (such as a leaching residue).

The dissolution process of the invention characteristically comprises:
- the roasting of a material, comprising the searched elements, which material is mixed, dry or in the presence of water, with an acidic roasting agent in order to obtain a calcine; said material consisting of said ore or concentrate or having been obtained from said ore or said concentrate and said acidic roasting agent providing for roasting in a sulphate medium; and
- the dissolution in an aqueous solution of the calcine obtained in order to obtain a slurry, the liquid fraction of which includes iron, in the ferric state, at a concentration of at least 50 g/l, advantageously of at least 70 g/l and very advantageously of at least 120 g/l.

The process of the invention thus comprises two main stages carried out in succession: a stage of roasting a material which includes the desired elements of value (elements which it is desired to dissolve) and a stage of dissolving the calcine obtained on conclusion of said roasting.

The material subjected to the roasting can consist of the ore or ore concentrate concerned. It may also have been obtained from said ore or ore concentrate. It may thus be said ore or ore concentrate physically enriched (thus upstream of the roasting) or a leaching residue (said leaching having been carried out, thus upstream of said roasting, on the said ore or ore concentrate, optionally physically enriched).

The material to be roasted can be dry or in the presence of water. It can in particular be in the form of a slurry, of a wet cake or of a dry solid.

It is (advantageously intimately) mixed with the roasting agent. Said roasting agent is an acidic agent (H₂SO₄ and/or SO₃ and/or at least one alkali metal pyrosulphate, and the like) which provides for roasting in a sulphate medium. It has been seen above that the addition of hydrofluoric acid is not required. The desired elements (Nb and/or Ta + U and/or rare earth element(s)) are quantitatively attacked during the roasting stage.

Characteristically, in the context of the process of the invention, the calcine obtained on conclusion of the roasting stage is dissolved in an aqueous solution (such an aqueous solution generally consists in water or in a solution containing salts (such as phosphates and/or sulfates of alkaline metals and/or earth alkaline metals and/or transition metals). Such a salt containing solution is advantageously produced in the carried out process) in order to obtain a slurry, the liquid fraction of which (isolated after carrying out a liquid/solid separation) includes iron, in the ferric state, at a concentration of at least 50 g/l. This concentration is advantageously at least 70 g/l. It is very advantageously greater than or equal to 100 g/l, and even 120 g/l, and generally does not exceed the solubility limit (of iron) in the medium, which is generally 150 g/l, in order to avoid any precipitation of iron. The amount of water used in the dissolution is advantageously limited, very advantageously it is as low as possible, in order to maximize the concentration of desired dissolved elements of value. It is generally between 0.5 I of water/kg of calcine and 5 I of water/kg of calcine. It is advantageously less than 5 I of water/kg.

Under such conditions (sulphate medium concentrated in ions, in particular ferric ions), the dissolution of the Nb and/or Ta has proved to be highly quantitative.

The iron present in the slurry can originate from the calcine or have been, at least in part, added to the calcine (in the liquid and/or solid form (the iron can more particularly be added in the dissolution aqueous solution), under any valency (in any case, it is, *in situ*, in the form of ferric sulphate)). The source of iron can correspond in particular to an iron ore or to an iron concentrate in the form of oxide or sulphide (for example pyrites), a ferrous or ferric salt (for example FeSO₄, Fe₂(SO₄)₃ or FePO₄) a solution comprising iron or iron metal. It is to the credit of the inventors to have demonstrated the critical nature of the presence of the iron during this stage of dissolution of the calcine.

Said stage of dissolution of the calcine can be carried out according to different alternative forms. The calcine can be cooled in order to be subsequently crushed or ground before dissolution. It can also be used as is, under hot conditions, on departing from the roasting furnace. It is generally slurried in the limited amount of aqueous solution at a temperature between ambient temperature and the boiling point of the medium, advantageously at a temperature between 85°C and a temperature slightly below said boiling point.

On the conclusion of the dissolution of the calcine, the slurry or the liquor obtained after carrying out a liquid/solid separation on said slurry can be diluted (by a limited factor, generally not exceeding 5) without substantial precipitation of the dissolved elements of value (mainly Nb and/or Ta). Such a dilution is targeted at preventing any crystallization of the dissolved salts, such as ferric sulphate. Nb and/or Ta present in the roasting leachate obtained after carrying out a liquid/solid separation of the above type, can be separated (by various techniques, such as extraction by solvent(s) or selective precipitations). The resulting solution can advantageously be recycled upstream of the process, upstream of the first roasting stage, at a preliminary leaching stage (see below). Such a recycling is doubly opportune in that it involves, first, the recycling of the acidity and, secondly, the recycling of unseparated element(s) of value. A separation of Nb and/or Ta from the roasting leachate has indeed been mentioned above but a person skilled in the art very obviously understands that it is not necessarily a 100% separation. This comment on the term "separation" and on the term "separated" is valid throughout the present text and appended figures.

Due to the high concentration of iron, the process of the invention makes it possible to dissolve the desired elements of value at a restricted free acidity: 0.1 N ≤[H⁺] < < 15 N, preferably: 1N≤[H⁺]≤6N.

It is surprising that, under such acidity conditions, the niobium and/or the tantalum present remain(s) in solution. A person skilled in the art is actually not unaware that, in a medium of restricted acidity, niobium and tantalum sulphates are normally respectively hydrolysed to niobic acid (Nb₂O₅.nH₂O) (Nouveau traité de chimie minérale (oxyde de niobium pentavalent hydraté ou oxyde niobique)) [New Treatise on Inorganic Chemistry (pentavalent niobium oxide hydrate or niobic oxide)], by P. Pascal and R. Rohmer, Volume XII, p. 454) and tantalic acid (Ta₂O₅.nH₂O), which are insoluble. The presence of iron is thus particularly opportune.

Thus, the dissolution of the calcine according to the invention is advantageously carried out without any addition of sulphuric acid. It should be noted that the addition of a make-up of sulphuric acid, in order to optimize the level of acidity, cannot be completely ruled out but that, in any case, the dissolution of the calcine according to the invention is not carried out in a highly acidic medium (as is, for example, recommended in Patent US 3 087 809).

The dissolution of the calcine is advantageously carried out (more particularly subsequent to direct roasting of ore (without prior leaching: see below)) with addition of at least one, generally one, reducing agent to said calcine. Such a reducing agent must not be used in an excessive amount as it is advisable for the iron present in the dissolution to remain in the ferric state. This reducing agent plays a part in particular with reference to the dissolution of the manganese. Sulphur dioxide (SO₂) is suitable as such a reducing agent.

The roasting stage of the process of the invention can consist of an acid roasting or a sulphation roasting. The person skilled in the art knows both these types of roasting. The first is a liquid/solid (H₂SO_{4/}material to be roasted) reaction and the second is a gas/solid (gaseous SO₃ (generally generated *in situ* from SO₂, H₂SO₄, at least one alkali metal pyrosulphate, and the like)/material to be roasted) reaction.

It is intended to provide below some information regarding these two types of roasting. Said information is in no way limiting.

### Acid roasting

It is generally carried out between 150°C and 400°C, using sulphuric acid, between 100 kg of H₂SO₄/t of dry matter to be roasted and 3000 kg/t, preferably between 500 kg/t and 1500 kg/t. The acidic solution which impregnates the material to be roasted then comprises between 30% and 98% of H₂SO₄ according to the moisture content of the material which is roasted with the acid. Its boiling point is generally between 108 and 340°C. This acid roasting can be carried out below or above the boiling point, preferably between 250 and 300°C. The mineral phase carrying the NTURE (at least some of them) is quantitatively attacked, for example 90% of a pyrochlore phase.

Soluble metal sulphates are then formed.

The metal oxides of the mineral phases are attacked by the sulphuric acid according to:
MOₓ + x H₂SO₄ → M(SO₄)ₓ + X H₂O, in particular:
   - iron: 2 FeOOH + 3 H₂SO₄ → Fe₂(SO₄)₃ + 4 H₂O
   - rare earth elements (RE): RE₂O₃ + 3 H₂SO₄ → RE₂(SO₄)₃ + 3 H₂O.

According to Ya. G. Goroshchenko (in the Journal de Chimie Inorganique, Vol. I, No. 5, 1956, pp. 903-908), Nb₂O₅ can form various sulphate compounds on reacting with sulphuric acid.

According to Ya. G. Goroshchenko (see above) and Patent CN 1 904 097, the niobium present in the pyrochlore is supposed to be attacked during a roasting above 150°C to give Nb₂O₃(SO₄)₂.

The attack reaction for the tantalum is assumed to be identical.

### Sulphation roasting

It is generally carried out between 400°C and 700°C, preferably between 450°C and 550°C, using gaseous sulphur trioxide (SO₃), which is formed either by oxidation of sulphur dioxide (SO₂) or by decomposition of sulphuric acid (H₂SO₄) or by decomposition of alkali metal pyrosulphate (M₂S₂O₇, where M = Na, K, and the like).

The metal oxides of the mineral phases are sulphated by the action of gaseous SO₃ according to:
MOₓ + x SO₃ (g) => M(SO₄)ₓ, in particular:
   - iron: 2 FeOOH + 3 SO₃ → Fe₂(SO₄)₃ + H₂O
   - rare earth elements (RE): RE₂O₃ + 3 SO₃ → RE₂(SO₄)₃

Soluble metal sulphates are then formed.

It is assumed that the niobium present in the pyrochlore is attacked during the sulphation roasting to give Nb₂O₃(SO₄)₂.

The attack reaction for the tantalum is assumed to be identical.

The uranium and the rare earth elements liable to be present in the material to be roasted (pyrochlore or other mineral phases) can exist in different valency states. On conclusion of the implementation of the roasting, they are converted to a form which is soluble in the concentrated ferric sulphate medium.

The roasting of the process of the invention, whatever the exact procedure, is advantageously carried out in the presence of iron, in the ferric form.

The presence of ferric iron in the roasting (in addition to the presence of ferric iron in the dissolution: see above) improves the yields of attack on the mineral phase carrying the niobium and/or tantalum, in particular pyrochlore. This improvement is generally significant for levels of iron such that the Fe/(Nb + Ta) molar ratio is greater than 2. It is understood that the ratio concerned is read Fe/Nb, Fe/Ta or Fe/(Nb + Ta) according to the presence, together of separately, of the elements Nb and Ta in the material concerned (one at least of said elements obviously being present). Said molar ratio Fe/(Nb + Ta) is advantageously greater than 3.5 and very advantageously greater than 6.

The amount of iron opportunely present in the roasting can be present in the material to be roasted (for example a partial leaching residue (see below) from an iron ore) or be added, at least in part, in the liquid and/or solid form, to said material to be roasted (it is also possible to add the iron by introducing a portion of the ultrafines from an ore or ore concentrate, referred to as "slimes", separated beforehand). The source of iron can thus be in various physical states solid and/or liquid, and in all the possible valency states of iron (under the conditions of implementation of the roasting, said iron is in the ferric state). The source of iron can correspond in particular to an iron ore or to an iron concentrate in the form of oxide or sulphide (for example pyrites), a ferrous or ferric salt (for example FeSO₄, Fe₂(SO₄)₃ or FePO₄), a solution comprising iron or iron metal. Whatever the source of iron, if it brings said iron under a valency other than ferric, the iron is oxidized *in situ* during the roasting.

It is thus to the credit of the inventors to have demonstrated the opportune presence of ferric iron, as aid for the dissolution of Nb and Ta, during the dissolution of the calcine and advantageously during the roasting and the dissolution of the calcine, in a context of the treatment of NTURE ore or ore concentrate.

Furthermore, the inventors have also noted the opportune presence of phosphate in the roasting. Thus, according to an advantageous alternative embodiment of the process of the invention, the roasting is carried out in the presence of phosphate, advantageously present at a PO₄/(Nb + Ta) molar ratio of greater than 2 and very advantageously of greater than 6; said phosphate being already present in the material to be roasted and/or having been added, at least in part, in the liquid and/or solid form, to said material to be roasted.

It has been seen above that the material to be roasted can consist of an ore (direct roasting), of an ore concentrate (concentrate obtained subsequent to a prior enrichment: it is also possible to speak of direct roasting, in the context of implementation of the process of the invention) or of a material obtained from such ores or ore concentrates (reference is made here to indirect roasting, insofar as the process of the invention encompasses, upstream of the roasting, a treatment of said ore or ore concentrate).

Thus, according to an alternative form, the process of the invention comprises, upstream of the roasting, a physical enrichment and/or a chemical treatment of the ore or ore concentrate to be treated.

Such a physical enrichment can be based on any conventional method for the physical enrichment of a solid material; for example, it can consist of a low-intensity magnetic separation (in order to remove the magnetic) or of a flotation (of the silica flotation or apatite flotation type).

Such a chemical treatment advantageously comprises an acid atmospheric leaching, very advantageously a sulphuric acid atmospheric leaching. Such a leaching can thus be carried out on an ore, an ore concentrate, a physically enriched ore or a physically enriched ore concentrate.

Such a leaching is advantageous for upstream dissolution of the matrix (of the elements of the matrix, such as Fe, Al, P, Mn, and the like) by the action of the used acid, very advantageously sulphuric acid. It only partially attacks the desired elements of value (NTURE). It makes it possible to reduce the amount of material to participate in the roasting. A significant proportion of the uranium present can be extracted at this stage (typically 60 to 80%). However, the niobium and/or the tantalum are not quantitatively dissolved by such a leaching when these elements are within refractory mineral phases, for example within pyrochlore.

Such a leaching is advantageously carried out according to one or other of the two alternative forms specified below.

Specifically, said leaching can be carried out:
- either in a single stage, referred to as "cocurrentwise";
- or in 2 stages "countercurrentwise". The first stage is referred to as "mild" as the acidity is restricted by the addition of the material to be leached (ore or concentrate), which neutralizes the recycled acidity. The second stage is referred to as "aggressive" as this is the stage where the acid is introduced.

The leaching agent is very advantageously sulphuric acid (H₂SO₄).

In other words, the dissolution process of the invention advantageously comprises, upstream of the roasting:
A) a leaching, in a single stage, cocurrentwise, in the presence of (added) sulphuric acid (such a leaching is generally carried out at a temperature of between 10 and 115°C), followed by a solid/liquid separation which produces a leachate (to be recovered upstream of the roasting and which includes a portion of the desired elements) and a leaching residue to be roasted; or
B) a leaching, in two stages, countercurrentwise, comprising a first leaching stage (carried out under mild conditions (without any addition of sulphuric acid) by the action, on the material to be leached, of a liquid with recycled residue acidity (see below)), followed by a solid/liquid separation which produces a leachate (to be recovered upstream of the roasting and which includes a portion of the desired elements) and a first leaching residue, and a second leaching stage carried out on said leaching residue, in the presence of sulphuric acid (under aggressive conditions), followed by a solid/liquid separation which produces a second leaching residue to be roasted and a liquid with residue acidity to be advantageously recycled (this second leachate can be recycled as it is or after having separated at least a portion of the elements of value present therein (see below)) to said first (mild) leaching stage.

The leaching prestage is advantageously (with reference to an optimization of the consumption of acid) carried out according to its alternative form B) above, which thus produces, upstream of the roasting, on the one hand, after the "mild" leaching, a leachate of restricted residual acidity and, on the other hand, after the "aggressive" leaching, a leaching residue to be roasted.

A leaching, in a single stage, cocurrentwise, in the presence of H₂SO₄, as mentioned in point A) above, can be carried out under a "ferric" condition or under a "ferrous" condition. Each of said "ferric" and "ferrous" conditions is specified below.

### - "Ferric":

The potential is greater than 500 mV Ag/AgCl, preferably greater than or equal to 600 mV/AgCl, so as to limit the amount of ferrous ions in solution.

The leaching agent is sulphuric acid (H₂SO₄).

The gangue, for example a mixture of crandallite and goethite, is leached according to:
2 Fe(III)OOH + 3 H₂SO₄ → Fe(III)₂(SO₄)₃ + 4 H₂O
2 CaAl₃(PO₄)(HPO₄)(OH)₆ + 11 H₂SO₄ →
3 Al₂(SO₄)₃ + 2 CaSO₄.2H₂O + 8 H₂O + 4 H₃PO₄.

The attack on one mole of Fe in a ferric medium thus consumes 1.5 mol of H₂SO₄ and that on one mol of candallite consumes 5.5 mol of H₂SO₄.

A reducing agent (at least one), such as sulphur dioxide (SO₂) or metal (iron, zinc, scrap iron, and the like) as divided or massive material (metal powder, scraps, and the like), can be introduced as make-up. It plays a part, *a priori*, advantageously with reference to the reduction of the manganese oxides possibly present in the ore or ore concentrate treated.

### - "Ferrous":

The potential is less than 500 mV Ag/AgCl and preferably less than or equal to 450 mV Ag/AgCl, so as to limit the amount of ferric ions in solution.

The leaching agent is sulphuric acid (H₂SO₄). If sulphur dioxide (SO₂) is present, it performs the double role of leaching agent and of reducing agent (see below). The reduction of the medium is obtained by addition of (at least) one reducing agent, such as sulphur dioxide (SO₂), metal (iron, zinc, scrap iron, and the like) as divided or massive material (metal powder, scraps, and the like). The iron is leached in the Fe²⁺ form according to:

2 Fe(III)OOH + 3 H₂SO₄ → Fe(III)₂(SO₄)₃ + 4 H₂O (1)

Fe(III)₂(SO₄)₃ + SO₂ + 2 H₂O → 2 Fe(II)SO₄ + 2 H₂SO₄ (4a)

2 Fe(III)OOH + H₂SO₄ + SO₂ → 2 Fe(II)SO₄ + 2 H₂O (4)

The reduction (4a) makes it possible to regenerate the acidity, with the result that an attack in a ferrous medium on one mole of Fe by H₂SO₄ (in the possible presence of the reducing agent SO₂) consumes one mole of acid (H₂SO₄ and SO₂ combined), that is to say half a mole less than in the ferric medium.

The ferric ions present participate in the dissolution of the niobium or (and, if both are present) of the tantalum (see above) and, on converting said ferric ions to ferrous ions, the precipitation is brought about of said niobium or (and) of said tantalum, leached out, dissolved, before complete reduction of said ferric ions to ferrous ions. Carrying out the leaching at a temperature close to the boiling point, for example above 90°C, makes it possible to further improve the precipitation of the niobium or (and) of the tantalum as this promotes the thermal precipitation of these elements.

The leaching is consequently preferably carried out in a ferrous medium, so as to obtain separation of Nb or (and) Ta with respect to U or (and) rare earth elements starting from upstream of the process. This also makes it possible to limit the consumption of leaching agent for the matrix (for example H₂SO₄ and SO₂ combined).

Thus, the leaching mentioned in point A) above can be carried out according to the two alternative forms below and consists of:
A1) a leaching, in a single stage, cocurrentwise, at a potential of greater than 500 mV Ag/AgCl and advantageously of greater than or equal to 600 mV Ag/AgCl, in the presence of (added) H₂SO₄ and optionally of a make-up of at least one (generally one) reducing agent, such as sulphur dioxide (SO₂) or metal (iron, zinc, scrap iron, and the like) as divided or massive material (metal powder, scraps, and the like), followed by a solid/liquid separation which produces a ferric leachate (to be recovered upstream of the roasting and which includes a portion of the desired NTURE elements) and a leaching residue to be roasted; or
A2) a leaching, in a single stage, cocurrentwise, at a potential of less than 500 mV Ag/AgCl and advantageously of less than or equal to 450 mV Ag/AgCl, in the presence of (added) H₂SO₄ and of at least one (generally one) reducing agent, such as sulphur dioxide (SO₂) or metal (iron, zinc, scrap iron, and the like) as divided or massive material (metal powder, scraps, and the like), followed by a solid/liquid separation which produces a ferrous leachate (to be recovered upstream of the roasting and which essentially includes uranium and/or rare earth elements) and a leaching residue enriched in niobium and/or tantalum to be roasted.

In the same way, the leaching, in two stages, countercurrentwise, mentioned in point B) above, can be carried out according to the two alternative forms specified below and consists of:
B1) a leaching, in two stages, countercurrentwise, comprising a first leaching stage, at a potential of greater than 500 mV Ag/AgCl and advantageously of greater than or equal to 600 mV Ag/AgCl, in the presence of H₂SO₄ (recycled, advantageously from the second leaching stage) and optionally of a make-up of at least one (generally one) reducing agent, such as sulphur dioxide (SO₂) or metal (iron, zinc, scrap iron, and the like) as divided or massive material (metal powder, scraps, and the like), followed by a solid/liquid separation which produces a ferric leachate (to be recovered upstream of the roasting and which includes a portion of the desired elements) and a first leaching residue, and a second leaching stage carried out on said first leaching residue, either at a potential of greater than 500 mV Ag/AgCl and advantageously of greater than or equal to 600 mv Ag/AgCl, in the presence of H₂SO₄ and optionally of a make-up of at least one (generally one) reducing agent, such as sulphur dioxide (SO₂) or metal (iron, zinc, scrap iron, and the like) as divided or massive material (metal powder, scraps, and the like), or at a potential of less than 500 mV Ag/AgCl and advantageously of less than or equal to 450 mV Ag/AgCl, in the presence of H₂SO₄ and of at least one (generally one) reducing agent, such as sulphur dioxide (SO₂) or metal (iron, zinc, scrap iron, and the like) as divided or massive material (metal powder, scraps, and the like), followed by a solid/liquid separation which produces a second leaching residue to be roasted and a liquid (ferric or ferrous leachate) with residual acidity to be advantageously recycled to said first leaching stage; or
B2) a leaching, in two stages, countercurrentwise, comprising a first leaching stage, at a potential of less than 500 mV Ag/AgCl and advantageously of less than 450 mV Ag/AgCl, in the presence of H₂SO₄ (recycled, advantageously from the second leaching stage) and of at least one (generally one) reducing agent, such as sulphur dioxide (SO₂) or metal (iron, zinc, scrap iron, and the like) as divided or massive material (metal powder, scraps, and the like), followed by a solid/liquid separation which produces a ferrous leachate (to be recovered upstream of the roasting and which essentially includes uranium and rare earth elements, if they were present initially) and a first leaching residue, and a second leaching stage carried out on said first leaching residue, either at a potential of greater than 500 mV Ag/AgCl and advantageously of greater than or equal to 600 mV Ag/AgCl, in the presence of H₂SO₄ and optionally of a make-up of at least one (generally one) reducing agent, such as sulphur dioxide (SO₂) or metal (iron, zinc, scrap iron, and the like) as divided or massive material (metal powder, scraps, and the like), or at a potential of less than 500 mV Ag/AgCl and advantageously of less than or equal to 450 mV Ag/AgCl, in the presence of H₂SO₄ and of at least one (generally one) reducing agent, such as sulphur dioxide (SO₂) or metal (iron, zinc, scrap iron, and the like) as divided or massive material (metal powder, scraps, and the like), followed by a solid/liquid separation which produces a second leaching residue enriched in niobium and/or tantalum to be roasted and a liquid (ferric or ferrous leachate) to be advantageously recycled to said first leaching stage. Said liquid to be advantageously recycled to said first leaching stage can be recycled directly (as it is) or after having separated at least partially the niobium and/or tantalum present therein (after separation, at least partially, of the niobium and/or tantalum present therein). Such a separation can be of any type. It can consist in particular of a selective precipitation or of a solvent extraction.

The alternative forms B1) and B2) above thus comprise a first leaching stage carried out, respectively, under ferric conditions (B1)) and under ferrous conditions (B2)) and a second leaching stage carried out under ferric or ferrous conditions.

It is seen that the countercurrent thus employed between the acid and the material to be leached (ore or concentrate) is particularly advantageous with reference to an optimization of the consumption of acid necessary for the dissolution of the entities of the matrix and to an optimization of the attack on the matrix.

It has been understood in the light of the above remarks that the leaching prestage is advantageously carried out according to its alternative forms A2) and B2) above which thus produce, upstream of the roasting, on the one hand a ferrous leachate (rich in uranium and/or rare earth elements) and, on the other hand, a leaching residue to be roasted enriched in niobium and/or tantalum. Said leaching prestage is very advantageously carried out according to the alternative form B2).

The material to be roasted is advantageously ground upstream of the roasting. Such a grinding is intended to improve the performance of the roasting of the material by promoting the accessibility of the reactants to the mineral phases carrying the elements of value. Grinding is advantageously carried out in order to obtain 100% passing at 30 µm of the mass to be roasted (i.e., exhibiting a particle size ≤ 30 µm), advantageously in order to obtain 100% passing at 15 µm of the mass to be roasted (i.e., exhibiting a particle size ≤ 15 µm) and very advantageously in order to obtain 100% passing at 10 µm of the mass to be roasted (i.e., exhibiting a particle size ≤ 10 µm). The grinding concerned is thus an ultrafine grinding. It should be noted that, in any case, even in the absence of an ultrafine grinding, the operation is generally carried out, in the context of the process of the invention, on material exhibiting a particle size of less than 700 microns and advantageously of less than 400 microns (which has generally been subjected to a pregrinding).

A person skilled in the art has understood that the optional stages of the process of the invention explained above, to be carried out upstream of the roasting, are advantageously carried out in the following order:
- physical enrichment,
- leaching, and
- grinding,
assuming, of course, that at least two of said stages are carried out.

There may also be provided, in the case of the treatment according to the invention of an iron ore or iron ore concentrate, a desliming of said ore or concentrate, targeted at separating the slimes (the ultrafines) from the other particles. Such a desliming can be carried out by microcycloning. The particle size cutoff is typically between 5 and 20 µm, preferably between 5 and 10 µm. A portion of the slimes recovered is advantageously used downstream in the process of the invention as source of iron (in the dissolution of the calcine and/or in the roasting).

As regards the downstream of the dissolution of the calcine according to the invention, an optional dilution by a limited factor (which generally does not exceed 5) in order to prevent a precipitation of the elements to be dissolved, was mentioned above. It may generally be indicated that the process of the invention advantageously comprises, downstream of the dissolution of the calcine:
- a solid/liquid separation carried out directly on the slurry or after an additional stage of dilution of said slurry by a limited factor (advantageously ≤ 5) in order to prevent the precipitation of the dissolved elements; said solid/liquid separation producing a solid attack residue and a roasting leachate including said dissolved elements.

In the context of this advantageous alternative form, it is opportune to provide for:
- the separation of niobium and/or tantalum, in solution in said roasting leachate, and advantageously the recycling of said leachate, from which said niobium and/or tantalum were separated, which is optionally diluted, for the implementation of a sulphuric acid atmospheric leaching upstream of the roasting (see above).

The separation of niobium or (and) of the tantalum from a solution in which it (they) are present was mentioned above. Such a separation can be carried out in particular by solvent extraction (cf. figures) or by selective precipitations. The solution purified from Nb and/or Ta is advantageously recycled. Its acidity is thus recycled.

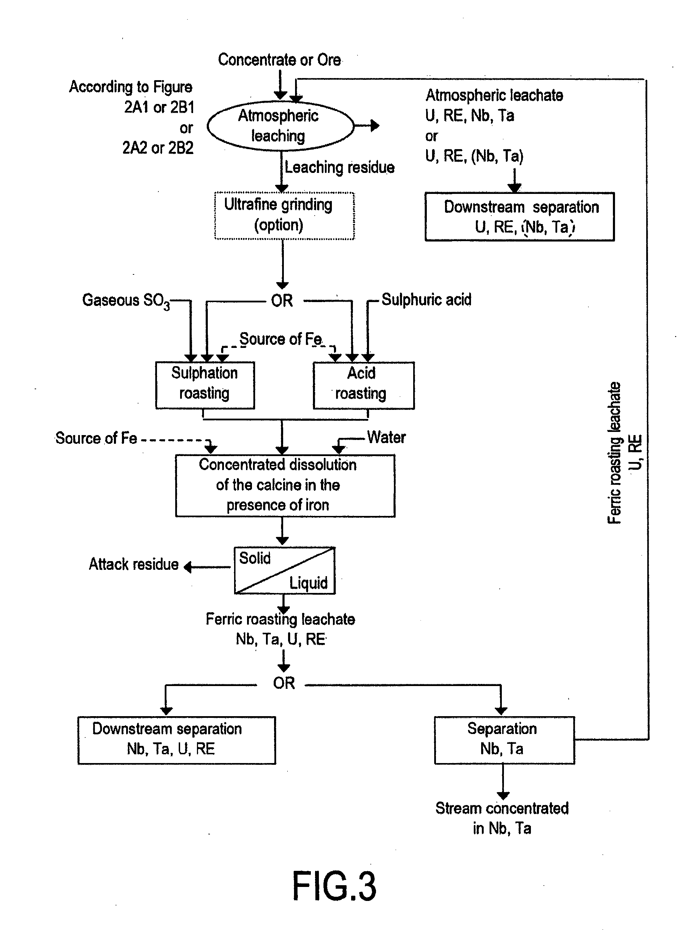

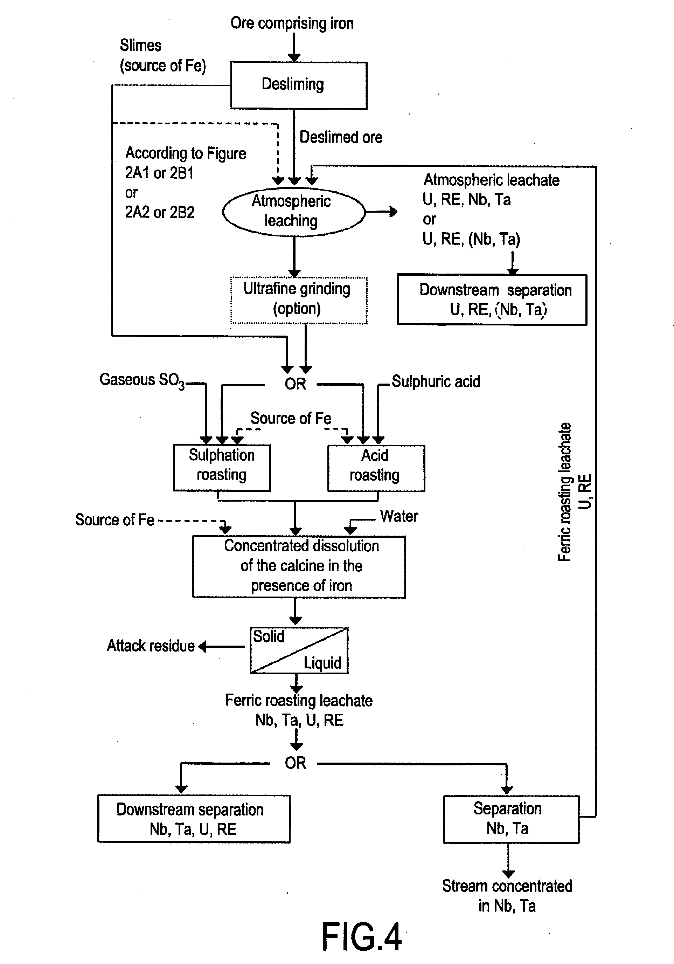

It is intended to specify below two preferred embodiments of the process of the invention. These two embodiments are represented diagrammatically in the appended Figures 3 and 4.

According to a first embodiment, the dissolution process of the invention comprises:
- a leaching of A) or B) type above (advantageously of A1), A2), B1) or B2) type above and very advantageously of A2) or B2) type above) and the recovery (downstream) of the leachate and of a leaching residue;
- an optional ultrafine grinding of said leaching residue;
- the roasting of said optionally ground leaching residue;
- the dissolution of the calcine obtained on conclusion of said roasting, in order to obtain a slurry;
- a liquid/solid separation, carried directly on said slurry or on said slurry diluted by a limited factor (see above), which produces a solid attack residue and a roasting leachate including the desired elements of value (dissolved);
- the separation of the niobium and/or tantalum from said roasting leachate and the recycling of the leachate, from which said niobium and/or tantalum were/was separated (see the above comment with regard to the term "separated"), which is optionally diluted, for the implementation of said leaching.

According to a second embodiment, the dissolution process of the invention comprises:
- a desliming of an ore or concentrate (comprising iron), which is optionally physically enriched, for the recovery, on the one hand, of slimes including iron and, on the other hand, of the deslimed ore or concentrate (i.e., ore or concentrate freed from at least a portion (generally more than 50% by weight) of its slimes);
- a leaching of A) or B) type above (advantageously of A1), A2), B1) or B2) type above and very advantageously of A2) or B2) type above) carried out on said deslimed ore or concentrate, optionally with addition of a portion of the slimes recovered in step 1 above (generally the portion of said recovered slimes not used below in the roasting), and the downstream recovery of a leachate and of a leaching residue;
- an optional ultrafine grinding of said leaching residue;
- the roasting of said optionally ground leaching residue, carried out with addition of iron *via* another portion of the slimes recovered in step 1 above;
- the dissolution of the calcine obtained on conclusion of the said roasting, in order to obtain a slurry;
- a liquid/solid separation, carried directly on said slurry or on said slurry diluted by a limited factor (see above), which produces an attack residue and a roasting leachate including the desired elements (dissolved);
- the separation of the niobium and/or tantalum from said roasting leachate and the recycling of said roasting leachate, from which the niobium and/or the tantalum was/were previously separated, which is optionally diluted, for the implementation of said leaching.

The process described above, for the dissolution of the identified elements: Nb and/or Ta + U and/or rare earth elements, is suitable for treating any ore or ore concentrate including said elements. It is suitable in particular for treating ores and ore concentrates, the ore concerned being chosen from minerals of the pyrochlore (of general formula: A₂B₂O₆(O,OH,F), with A = U, RE, Na, Ca, Ba, Th or Bi (in particular) and B = Nb, Ta, Ti or Fe (in particular)), euxenite, samarskite, perovskite or fergusonite groups and their mixtures. Such ores and ore concentrates optionally comprise iron.

It has already been indicated above that it is particularly advantageous in that it is suitable for treating ores which cannot be beneficiated or can be beneficiated only to a slight extent or with difficulty by a prior physical treatment.

On conclusion of the implementation of the dissolution process of the invention described above, the desired elements of value are thus obtained in solution, in fact present in at least one solution. Said process is capable in particular resulting in at least one or more solutions including Nb and/or Ta + U and/or rare earth elements.

In any case, the NTURE present in the treated material are reencountered in solution. To recover them, it is appropriate to separate them from their solvent. Processes familiar to a person skilled in the art for obtaining such separations: solvent extraction, selective precipitation, and the like, have been mentioned above.

According to its second subject-matter, the present invention thus relates to a process for the recovery of at least one element chosen from niobium and tantalum and of at least one other element chosen from uranium and the rare earth elements, advantageously for the recovery of niobium, tantalum, uranium and rare earth elements, present in an ore or an ore concentrate, characterized in that it comprises:
- the dissolution of said elements (of value) according to the dissolution process described above; and
- the separation of said elements (of value).

A person skilled in the art knows various technologies for separating these elements from one another.

It is now intended to describe the invention, without implied limitation, with reference to the appended figures. These figures repeat and contain a great deal of information. This information forms an integral part of the description of the invention.
Figure 1 gives a diagrammatic representation of a reference alternative embodiment of the processes of the invention (dissolution, followed by recovery).
Figures 2A1, 2A2, 2B1 and 2B2 give a diagrammatic representation of alternative forms of the leaching stage optionally carried out upstream of the roasting of the processes of the invention.
Figure 3 gives a diagrammatic representation of alternative embodiments of the processes of the invention with prior leaching.
Figure 4 gives a diagrammatic representation of an alternative form of Figure 3 carried out on an ore with use of slimes of said ore as source of iron.

Preliminary comments:
1) The optional operations (optional stages, optional additions) have been indicated, in the figures, in dotted lines;
2) The material treated is assumed to include Nb, Ta, U and RE.

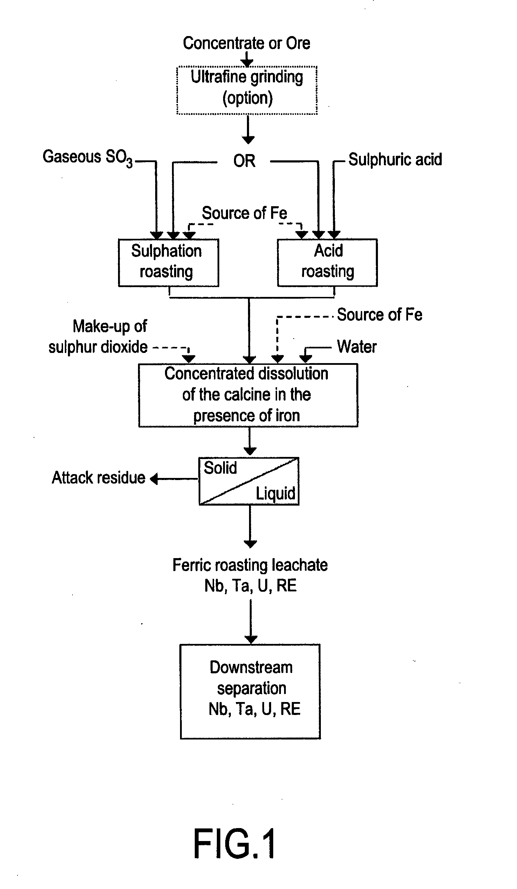

The process of the invention, represented diagrammatically in Figure 1, is carried out directly (= without upstream leaching) on an ore or ore concentrate including the elements of value: Nb, Ta, U and RE.

It optionally comprises a stage of ultrafine grinding (in order to obtain a material to be roasted exhibiting a particle size of less than or equal to 30 µm) of the material to be treated (ore or ore concentrate).

It comprises the successive stages of roasting (the two alternative forms of sulphation roasting and acid roasting are represented diagrammatically) and of dissolution of the calcine obtained on conclusion of said roasting. Said dissolution stage is carried out in the presence of iron with a small amount of water (a concentrated dissolution is concerned in order to obtain a slurry including at least 50 g/l of iron). The iron present (in the ferric state in said dissolution stage) can originate, at least in part, from the ore or ore concentrate treated; it can be added, at least in part, to the calcine; it can also be added only, at least in part, to the material to be roasted. SO₂ (reducing agent) may also optionally be added in the dissolution stage. It is optionally added in a small amount (an optional "make-up" of SO₂ has been shown), insofar as, as stated above, the iron present has to be present in the ferric state.

The slurry obtained on conclusion of the dissolution stage is directly (according to the alternative form represented) subjected to a liquid/solid separation. The solid constitutes the attack residue and the liquid or ferric roasting leachate includes the dissolved elements of value Nb, Ta, U and RE.

The final stage represented is that of the separation of said dissolved elements of value (for their separate recovery).

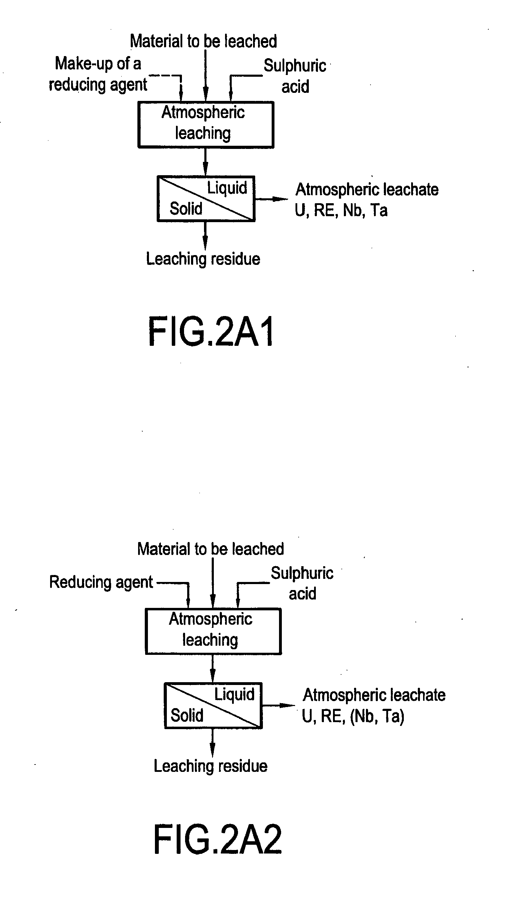

Figures 2A1 and 2A2 illustrate a first alternative embodiment of an upstream (acid atmospheric) leaching (variant A above), which is limited to an acid attack by H₂SO₄, followed by a solid/liquid separation. The amount of material to be roasted is thus reduced. An atmospheric leachate which includes a portion of the elements of value initially present in the material to be treated is recovered. The following have been more precisely illustrated:
- in Figure 2A1, the use of said cocurrentwise leaching under ferric conditions. The reducing agent, for example SO₂, is not compulsorily added (hence the dotted lines) and, in any case, it is only added as make-up. The yields for extraction of the elements of value (present in the material to be leached) vary according to the element concerned. They generally remain low for niobium and tantalum (see Examples α and β below);
- in Figure 2A2, the use of said cocurrentwise leaching under ferrous conditions. A reducing agent, for example SO₂, is compulsorily added. This reducing agent brings about the precipitation of the leached niobium and/or tantalum (assuming that these two elements were present in the material to be leached) and a ferrous atmospheric leachate, which essentially includes uranium and rare earth elements (if they were initially present in the material to be leached), and a leaching residue enriched in niobium and tantalum (assuming that these two elements were present in the material to be leached) are then obtained (see y below).

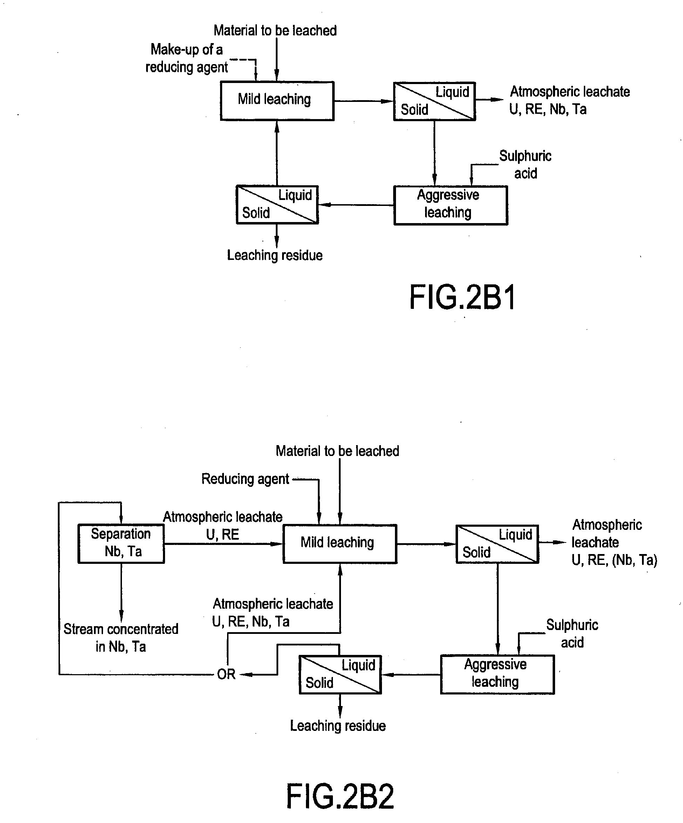

Figures 2B1 and 2B2 illustrate a second alternative embodiment of an upstream (acid atmospheric) leaching (variant B) above). The material to be leached is subjected to a first leaching stage which is described as a "mild" leaching stage, insofar as it is carried out, without contribution of H₂SO₄, by the action on said material of a recycled liquid which exhibits a residual acidity, due to the use of H₂SO₄ for carrying out a second leaching stage; said recycled liquid being composed of the leachate from said second leaching stage.

Said second leaching stage (which is described as an "aggressive" leaching stage (due to the use of H₂SO₄)) is thus carried out on the (solid) leaching residue from the first leaching stage.

Each leaching stage is conventionally followed by a solid/liquid separation which generates a leachate (liquid) and a residue (solid).

Such a two-stage upstream leaching generates, like the single- stage leaching (see Figure 2A), an atmospheric leachate, which includes a portion of the desired elements of value (in solution), and a leaching residue to be treated according to the invention (roasting + concentrated dissolution in the presence of iron).

The following have more specifically been illustrated:
- in Figure 2B1, the implementation of the countercurrentwise leaching, with a first "mild" leaching stage under ferric conditions (only a make-up of reducing agent, such as SO₂, is liable to be added), from where a ferric atmospheric leachate, which includes a portion of the desired NTURE elements (present in the material to be leached) is obtained, and a second "aggressive" leaching stage under ferric conditions;
- in Figure 2B2, the implementation of the countercurrentwise leaching, with a first "mild" leaching stage under ferrous conditions (see the involvement of the reducing agent), from where a ferrous atmospheric leachate, which includes essentially uranium and/or rare earth elements (if they were present initially in the material to be leached), and a leaching residue enriched in niobium and/or tantalum are obtained. It is noted that the leachate from the second "aggressive" leaching carried out under ferric conditions can be recycled (with its acidity) directly or after having separated Nb, Ta, and the like from it. A "total" separation has been represented diagrammatically.

It is recalled here, by the way, that the second aggressive leachings, represented carried out under ferric conditions in said Figures 2B1 and 2B2, without addition of a make-up of reducing agent, can altogether, in the context of the invention, also be carried out under ferric conditions, with addition of such a make-up or under ferrous conditions (thus with obligatory addition of a reducing agent).

Figure 3 illustrates alternative embodiments of the process of the invention with upstream atmospheric leaching and an advantageous alternative embodiment with regard to the downstream treatment of the ferric roasting leachate obtained.

In said Figure 3, Figure 1 is in fact reencountered, i.e. the reference stages of the process of the invention (optional ultrafine grinding + roasting + concentrated dissolution of the calcine in the presence of iron + solid/liquid separation with recovery of the liquid (ferric roasting leachate including in solution the desired elements of value).

In addition, an upstream leaching (according to Figure 2A1, 2A2, 2B1 or 2B2) has been provided and, downstream, according to one alternative form, the treatment of the leachate in order to recover the Nb and the Ta present therein in solution has been provided. According to the alternative form represented (a solvent extraction being carried out, said Nb and Ta are recovered in a concentrated stream (it is possible here altogether to provide, as indicated above, a recovery in the solid form, after precipitation). According to the represented alternative form, the leachate, from which said Nb and Ta was/were previously separated, is recycled to the upstream leaching.

Figure 4 shows the alternative forms of the process of Figure 3 carried out with an ore comprising iron and with use of said iron as source of iron in the roasting stage so that the ferric iron is present at the dissolution (and in the roasting). It should be noted that it is not ruled out that additional iron be added in the dissolution and/or in the roasting. The iron is recovered from the ore comprising it by desliming and the slimes are so used as source of iron.

The atmospheric leaching is carried out on the deslimed ore, to which can be added a portion of the slimes recovered (the portion not used in the roasting, so that the problem of the control of slimes does not arise).

With reference to Figures 3 and 4, it has been understood that, according to the type of upstream atmospheric leaching carried out, the atmospheric leachate includes a portion of the desired NTURE elements (a portion of those present in the material to be leached) (leaching according to Figures 2A1 and 2B1) or essentially uranium and/or rare earth elements (present in the material to be leached) (leaching according to Figures 2A2 and 2B2).

With reference to Figures 1, 3 and 4, it has to be noted that a stream of water and a possible stream of "source of iron" have been shown at the dissolution step. It is obvious that a single stream of an aqueous solution could be used in place of a stream of water and a stream of "source of iron".

It is intended now to illustrate the invention by examples.

### EXAMPLES

All the examples were carried out with ore pretreated physically by low-intensity magnetic separation (LIMS) and particle size reduction below 315 microns, except in the case of Example β-, where the particle size reduction was carried out to 630 microns.

### A - Direct sulphation roasting

### Example 1: Direct sulphation roasting with ultrafine grinding

Pyrochlore ore was ground in a vertical mill stirred with balls, so as to obtain a particle size corresponding to passing at 4 microns of 80% of the weight.

The analysis of the ore is given below:

| **Ore** | **Fe** | **Th** | **U** | **Ce** |
|---|---|---|---|---|
| Contents | 33.8% | 0.27% | 1100 ppm | 0.81% |

| **Nb** | **Ta** | **Ti** | **P** | **Mn** | **Si** |
|---|---|---|---|---|---|
| 2.5% | 1100 ppm | 2.1% | 3.7% | 3.3% | 1.0% |

451 g of slurry of ground ore in water at a solid content of 35%, i.e. 160 g of dry ore present, are introduced into a porcelain crucible. 251 g of 96% sulphuric acid are added, i.e. 1503 kg of H₂SO₄/tonne of ore. 24.3 g of sodium pyrosulphate (Na₂S₂O₇) are also added, i.e. 150 kg/tonne of ore. The mixture is stirred mechanically in order to ensure homogeneity. The Fe/(Nb+Ta) and PO₄/(Nb+Ta) molar ratios in the charge at roasting are respectively 22 mol/mol and 4.4 mol/mol. The crucible is placed in a kiln at 500°C for 4 hours. The roasted material is cooled. 298 g of calcine are obtained and the weight loss during the roasting is estimated at 58%, including 30% attributable to loss of water from the ore slurry.

116 g of the calcine are introduced into a stirred reactor containing 142 ml of water heated to 90°C, i.e. a water/"initial ore" ratio of 2.4. This slurry is stirred and maintained at temperature for 2 hours. The slurry is centrifuged and the solid centrifuging deposit is washed. The following results are then obtained:

| **Amount** | **Contents** | **Fe** | **Th** | **Ce** | **Nb** | **Ta** | **Ti** |
|---|---|---|---|---|---|---|---|
| 12.72 g | Solid residue (%) | 10.0% | 0.18% | 1.3% | 1.4% | 0.09% | 5.3% |
| 110 ml | Roasting leachate (g/l) | 120 | 0.42 | 0.44 | 8.0 | 0.30 | 4.4 |
| 315 ml | Aqueous wash liquor (g/l) | 15.6 | 0.26 | 0.70 | 1.00 | 0.03 | 0.57 |

The leachate contains 120 g/l of Fe, 8.0 g/l of Nb, 300 mg/l of Ta and 440 mg/l of Ce.

The dissolution yields, estimated by 2 methods of calculation, are given below:

| **Dissolution yields** | **Weight loss** | **Fe** | **Th** | **Ce** | **Nb** | **Ta** | **Ti** |
|---|---|---|---|---|---|---|---|
| Liquid/(Liquid + Solid) distribution | 79% | 93% | 85% | 62% | 87% | 80% | 50% |

From these yields, the pyrochlore mineral phase carrying the niobium and tantalum has been attacked to approximately 85% by sulphation roasting.

### B - Direct acid roasting

### Example 2: Acid roasting with ultrafine grinding (without use of SO₂ in the dissolution)

Pyrochlore ore was ground in a vertical mill stirred with balls, so as to obtain a particle size corresponding to passing at 18 microns of 100% of the weight.
The analysis of the ore is given below:

| **Ore** | **Fe** | **Mn** | **Th** | **U** | **Ce** |
|---|---|---|---|---|---|
| Contents | 29.9% | 2.7% | 0.15% | 1130 ppm | 0.65% |

| **Nb** | **Ta** | **Ti** | **P** | **Si** |
|---|---|---|---|---|
| 2.3% | 900 ppm | 2.1% | 3.3% | 0.55% |

207.7 g of slurry of ground ore in water at a solid content of 45% (i.e., 94.2 g of dry ore present) are introduced into a porcelain crucible. 147.5 g of 96% sulphuric acid are added, i.e. 1504 kg of H₂SO₄/tonne of ore. The attack solution thus comprises 41% of H₂SO₄ and the Fe/(Nb+Ta) and PO₄/(Nb+Ta) molar ratios in the charge in the roasting are respectively 21.4 mol/mol and 4.3 mol/mol. The mixture is stirred mechanically in order to ensure homogeneity. The crucible is placed in a kiln at 300°C and maintained for 4 hours. The roasted material is cooled. 180.1 g of calcine are obtained and the weight loss during the roasting is estimated at 49%.

All the calcine is introduced into a stirred reactor filled with 189 ml of water heated to 90°C; the water/"initial ore" ratio is thus 2.0. This slurry is stirred and maintained at temperature for 2 hours. The slurry is centrifuged and the solid centrifuging deposit is washed. The following results are then obtained:

| **Amounts** | **Contents** | **Fe** | **Th** | **U** | **Ce** | **Nb** | **Ta** |
|---|---|---|---|---|---|---|---|
| 16.6 g | Solid residue (%) | 10.6% | 0.08% | 92 ppm | 0.22% | 2.4% | 0.14% |
| 154 ml | Roasting leachate (g/l) | 135 | 0.95 | 0.53 | 2.4 | 8.3 | 0.31 |
| 545 ml | Aqueous wash liquor (g/l) | 9.9 | 0.09 | 0.04 | 0.24 | 0.25 | 0.020 |

| **Contents** | **Ti** | **Mn** |
|---|---|---|
| Solid residue (%) | 5.3% | 3.7% |
| Roasting leachate (g/l) | 4.1 | 10.4 |
| Aqueous wash liquor (g/l) | 0.28 | 0.7 |

The dissolution yields are given below:

| **Dissolution yields** | **Weight loss** | **Fe** | **Th** | **U** | **Ce** | **Nb** | **Ta** | **Ti** | **Mn** |
|---|---|---|---|---|---|---|---|---|---|
| Liquid/(Liquid + Solid) distribution | 82% | 94% | 94% | 99% | 93% | 78% | 72% | 47% | 77% |

Success is achieved in dissolving 8.3 g/l of Nb in a leachate, the free acidity of which is restricted, i.e. [H⁺] = 2.3N. 78% of the niobium and 72% of the tantalum are extracted in solution.

The titanium is partially extracted and the extracting yield for the manganese is only 76%.

### Example 3: Acid roasting with ultrafine grinding, with use of SO₂ in the dissolution

Pyrochlore ore was ground in a vertical mill stirred with balls, so as to obtain a particle size corresponding to passing at 10 microns of 100% of the weight.
The analysis of the ore is given below:

| **Ore** | **Fe** | **Mn** | **Th** | **U** | **Ce** |
|---|---|---|---|---|---|
| Contents | 31.7% | 2.8% | 0.22% | 1090 ppm | 0.70% |

| **Nb** | **Ta** | **Ti** | **P** | **Si** |
|---|---|---|---|---|
| 2.3% | 900 ppm | 2.1% | 3.4% | 0.63% |

372.1 g of slurry of ground ore in water at a solid content of 31% (i.e., 115 g of dry ore present) are introduced into a porcelain crucible. 180.9 g of 96% sulphuric acid are added, i.e. 1510 kg of H₂SO₄/tonne of ore. The attack solution thus comprises 31% of H₂SO₄ and the Fe/(Nb+Ta) and PO₄/(Nb+Ta) molar ratios in the charge in the roasting are respectively 22.3 mol/mol and 4.3 mol/mol. The mixture is stirred mechanically in order to ensure homogeneity. The crucible is placed in a kiln at 300°C and maintained for 4 hours. The roasted material is cooled. 229.2 g of calcine are obtained and the weight loss during the roasting is estimated at 58%.

All the calcine is introduced into a stirred reactor filled with 230 ml of water heated to 90°C; the water/"initial ore" ratio is thus 2.0. This slurry is stirred and maintained at a temperature for 2 hours under reduced bubbling of SO₂. The oxidation/reduction potential is then 570 mV Ag/AgCl (at such a potential, the iron present is predominantly ferric). The slurry is centrifuged and the solid centrifuging deposit is washed. The following are then obtained:

| **Amounts** | **Contents** | **Fe** | **Th** | **U** | **Ce** | **Nb** | **Ta** |
|---|---|---|---|---|---|---|---|
| 20.9 g | Solid residue (%) | 6.5% | 0.03% | 113 ppm | 0.19% | 1.6% | 600 ppm |
| 222 ml | Roasting leachate (g/l) | 142 | 1.1 | 0.54 | 3.0 | 8.9 | 0.38 |
| 224 ml | Aqueous wash liquor (g/l) | 20 | 0.18 | 0.07 | 0.6 | 0.73 | 0.025 |

| **Contents** | **Ti** | **Mn** |
|---|---|---|
| Solid residue (%) | 2.7% | 0.54% |
| Roasting leachate (g/l) | 6.6 | 16.1 |
| Aqueous wash liquor (g/l) | 0.82 | 2.2 |

The dissolution yields are given below:

| **Dissolution yields** | **Mass loss** | **Fe** | **Th** | **U** | **Ce** | **Nb** | **Ta** | **Ti** | **Mn** |
|---|---|---|---|---|---|---|---|---|---|
| Liquid/(Liquid + Solid) distribution | 82% | 96% | 98% | 98% | 95% | 87% | 88% | 74% | 97% |

Success is achieved in dissolving 8.9 g/l of Nb in a leachate, the free acidity of which is restricted, i.e. [H⁺] = 2.2N.

From the dissolution yields, the pyrochlore mineral phase carrying the niobium and tantalum was attacked to approximately 90% by virtue of a high ferric iron concentration on taking the calcine up in water (142 g/l of Fe), combined with the fine grinding before roasting and with the presence of iron in the roasting.

In comparison with Example 2, the use of SO₂ on taking up in water drastically improves the dissolution of the manganese (97%) and the titanium (74%) and improves by approximately +10% the extraction of the niobium and tantalum.

### Example 4: Acid roasting without ultrafine grinding, with use of SO₂ in the dissolution

The analysis of the ore used is given below:

| **Ore** | **Fe** | **Mn** | **Th** | **U** | **Ce** |
|---|---|---|---|---|---|
| Contents | 33.6% | 3.8% | 0.28% | 1090 ppm | 0.79% |

| **Nb** | **Ta** | **Ti** | **P** | **Si** |
|---|---|---|---|---|
| 2.8% | 1100 ppm | 2.5% | 3.8% | 0.86% |

The particle size of this ore corresponds to 100% passing at 315 microns.

159.9 g of slurry of ground ore in water at a solid content of 50% (i.e., 77.5 g of dry ore present) are introduced into a porcelain crucible. 120.8 g of 96% sulphuric acid are added, i.e. 1496 kg of H₂SO₄/tonne of ore. The attack solution thus comprises 43% of H₂SO₄ and the Fe/(Nb+Ta) and PO₄/(Nb+Ta) molar ratios in the charge in the roasting are respectively 20 mol/mol and 4.1 mol/mol. The mixture is stirred mechanically in order to ensure homogeneity. The crucible is placed in a kiln at 300°C and maintained for 4 hours. The roasted material is cooled. 138 g of calcine are obtained and the weight loss during the roasting is estimated at 51%.

All the calcine is introduced into a stirred reactor filled with 182 ml of water heated to 90°C; the water/"initial ore" ratio is thus 2.3. This slurry is stirred and maintained at a temperature for 2 hours under reduced bubbling of SO₂. The oxidation/reduction potential is then 555 mV Ag/AgCl (at such a potential, the iron present is predominantly ferric). The slurry is centrifuged and the solid centrifuging deposit is washed. The following results are then obtained:

| **Amounts** | **Contents** | **Fe** | **Th** | **U** | **Ce** | **Nb** | **Ta** | **Ti** |
|---|---|---|---|---|---|---|---|---|
| 12.4 g | Solid residue (%) | 9.3% | 0.1% | 288 ppm | 0.17% | 3.9% | 600 ppm | 5.4% |
| 172 ml | Roasting leachate (g/l) | 112 | 0.81 | - | 2.1 | 6.2 | 0.2 | 3.4 |
| 315 ml | Aqueous wash liquor (g/l) | 5.6 | 0.04 | - | 0.2 | 0.05 | 0.0012 | 0.12 |

The dissolution yields are given below:

| **Dissolution yields** | **Mass loss** | **Fe** | **Th** | **U** | **Ce** | **Nb** | **Ta** | **Ti** | **Mn** |
|---|---|---|---|---|---|---|---|---|---|
| Liquid/(Liquid + Solid) distribution | 84% | 95% | 93% | 96%* | 95% | 69% | 50% | 48% | 97% |

| | | | | | | | | | |
|---|---|---|---|---|---|---|---|---|---|
| ** Extraction yields from the analysis of the solids* | | | | | | | | | |

The leachate contains 6.2 g/l of Nb, 0.2 g/l of Ta, 2.1 g/l of Ce and 112 g/l of Fe and a free acidity corresponding to [H⁺] = 3.0N.

It is found that the extraction yields for niobium, tantalum and titanium are significantly poorer than those obtained for Example 3, between -20% for Nb and -40% for Ta, due to the fact that the ore was not ultrafinely ground beforehand, as is the case in Example 3.

### Example 5: Acid roasting with ultrafine grinding and dissolution of the calcine in a less concentrated medium without use of SO₂

The calcine used in this test is identical to that produced in Example 3.

All the calcine is introduced into a stirred reactor filled with 239 ml of water heated to 90°C, i.e. a water/"initial ore" ratio = 4.2. The slurry is stirred and maintained at a temperature for 1 hour. The oxidation/reduction potential is then 1200 mV Ag/AgCl. The slurry is filtered. The following results are then obtained:

| **Amount** | **Contents** | **Fe** | **Th** | **Ce** | **Nb** | **Ta** | **Ti** |
|---|---|---|---|---|---|---|---|
| 14.6 g | Solid residue (%) | 11.4% | 0.09% | 0.31% | 4.5% | 0.21% | 3.9% |
| 135 ml | Filtrate (g/l) | 72 | 0.56 | 1.53 | 2.9 | 0.16 | 2.5 |
| 380 ml | Aqueous wash liquor (g/l) | 19 | 0.15 | 0.44 | 0.66 | 0.04 | 1.0 |

The dissolution yields are given below:

| **Dissolution yields** | **Mass loss** | **Fe** | **Th** | **Ce** | **Nb** | **Ta** | **Ti** |
|---|---|---|---|---|---|---|---|
| Liquid/(Liquid + Solid) distribution | 74% | 91% | 91% | 89% | 50% | 55% | 56% |

The dissolution yields for the combined elements of the matrix (including Fe), on using a water/ore ratio of 4.2, are comparable to those obtained during Example 3, on using a water/ore ratio of 2.2.

The dissolution of the niobium and tantalum is significantly influenced by the water/initial ore ratio during the mixing of the calcined product with water. A dissolution yield for the niobium of 50% is actually obtained with a water/initial ore ratio of 4.2, whereas 87% of the niobium is dissolved with a water/initial ore ratio of 2.2, as explained in Example 3. The use of a low water/"initial ore" ratio brings about a higher concentration of iron: 142 g/l of Fe in Example 3 versus 72 g/l of Fe in Example 5. Example 7, which is presented later, shows that the addition of synthetic iron drastically improves the dissolution yields for niobium and tantalum.

### C- Indirect acid roasting

### Atmospheric leachings

### Example α: Ferric cocurrentwise leaching in the presence of a make-up of reducing agent (Figure 2A1)

Pyrochlore ore was ground, so as to obtain a particle size corresponding to passing at 106 microns of 100% by weight. The analysis of the ore is given below:

| **Ore** | **Fe** | **Mn** | **U** | **Th** | **Ce** | **La** | **Sc** |
|---|---|---|---|---|---|---|---|
| Contents | 33.6% | 3.8% | 1160 ppm | 0.27% | 0.99% | 0.36% | 170 ppm |

| **Nb** | **Ta** | **Ti** | **P** | **Si** |
|---|---|---|---|---|
| 2.6% | 1030 ppm | 2.4% | 3.9% | 0.9% |

500 g of ground dry ore are slurried in a stirred reactor with 566 g of water heated to 90°C. 835 g of 98% sulphuric acid, i.e. 1600 kg of H₂SO_{4/}tonne of ore, are added to the slurry. The initial solids content is thus 26%. Gaseous SO₂ is gradually added to the slurry, so as to maintain a potential of 580 mV Ag/AgCl in order to maximize the dissolution of the manganese.

The mixture is mechanically stirred for 24 h while maintaining the temperature at 90°C.

The slurry is filtered and the filtration cake is washed on the filter with demineralized water. The following results are then obtained:

| **Amount** | **Contents** | **Fe** | **Th** | **U** | **Ce** | **Nb** | **Ta** | **Ti** |
|---|---|---|---|---|---|---|---|---|
| 34.8 g | Solid residue (%) | 7.1% | 0.5% | 70 ppm | 1.61% | 6.3% | 0.4% | 6.6% |
| 500 ml | Filtrate (g/l) | 67 | 0.58 | 0.43 | 0.22 | 4.5 | 0.2 | 2.7 |
| 790 ml | Aqueous wash liquor (g/l) | 32 | 0.29 | 0.21 | 0.30 | 2.0 | 0.01 | 1.2 |

The dissolution yields are calculated with respect to the distribution between the liquids (filtrate and aqueous wash liquor) and the solid residue:

| **Dissolution yields** | **Weight loss** | **Fe** | **Th** | **U** | **Ce** | **Nb** | **Ta** | **Ti** |
|---|---|---|---|---|---|---|---|---|
| Liquid/(Liquid + Solid) distribution | 75% | 92% | 52% | 89% | 36% | 35% | 21% | 30% |

The uranium is dissolved to more than 80%. Although the leaching is carried out under highly acidic conditions (i.e., an initial solids content of 26% and an acid/ore ratio of 1600 kg/t), and, contrary to what is obtained after an acid roasting, the dissolution yields for niobium, tantalum and the rare earth elements do not exceed 35%. It could be shown, by characterizing the leaching residue, that the pyrochlore phase is not destroyed by leaching with sulphuric acid, even if more acid is used.

### Example β: Ferric cocurrentwise leaching without make-up of reducing agent (Figure 2A1)

Pyrochlore ore was ground, so as to obtain a particle size corresponding to passing at 630 microns of 100% of the weight. The analysis of the ore is given below:

| **Ore** | **Fe** | **Mn** | **U** | **Th** | **Ce** |
|---|---|---|---|---|---|
| Contents | 31.3% | 3.4% | 1150 ppm | 0.29% | 0.73% |

| **Nb** | **Ta** | **Ti** | **P** | **Si** |
|---|---|---|---|---|
| 2.8% | 1248 ppm | 2.1% | 3.7% | 0.75% |

90.2 g of ground dry ore are slurried in a stirred reactor with 400 ml of water heated to 90°C. 94 g of 98% sulphuric acid, i.e. 1022 kg of H₂SO₄/tonne of ore, are added to the slurry. The initial solid content is thus 15%. The mixture is mechanically stirred for 24 h while maintaining the temperature at 90°C.

The slurry is filtered and the filtration cake is washed on the filter with demineralized water. The following results are then obtained:

| **Amount** | **Contents** | **Fe** | **Th** | **U** | **Ce** | **Nb** | **Ta** | **Ti** |
|---|---|---|---|---|---|---|---|---|
| 38 g | Solid residue (%) | 22.2% | - | 1213 ppm | 1.13% | 6.3% | 2440 ppm | - |
| 255 ml | Filtrate (g/l) | 48.7 | 0.16 | 0.14 | 0.19 | 0.31 | 0.047 | 0.41 |
| 5400 ml | Aqueous wash liquor (g/l) | 0.35 | - | 0.0023 | - | < 0.0005 | < 0.0005 | - |

The dissolution yields are calculated with respect to the distribution between the liquids (filtrate and aqueous wash liquor) and the solid residue:

| **Dissolution yields** | **Weight loss** | **Fe** | **Th** | **U** | **Ce** | **Nb** | **Ta** | **Ti** |
|---|---|---|---|---|---|---|---|---|
| Liquid/(Liquid + Solid) distribution | 58% | 65% | 16%* | 54% | 7%* | 3.6% | 14% | 5.5%* |

| | | | | | | | | |
|---|---|---|---|---|---|---|---|---|
| **** Extraction yields from the analysis of the liquids.*** | | | | | | | | |

The leaching is carried out under acidic conditions (i.e., an initial solids content of 15% and an acid/ore ratio of 1022 kg/t) which are less acidic than those of the above test α (i.e., an initial solid content of 26% and an acid/ore ratio of 1600 kg/t). The extraction yields for the elements of value are consequently limited: 3.6% of Nb, 14% of Ta and 7% of Ce. Only the uranium is quantitatively extracted, at 54%.

### Example γ: Ferrous cocurrentwise leaching (Figure 2A2)

151 g of pyrochlore ore are ground, so as to obtain a particle size such that 100% of the grains pass through a 71 micron sieve.

The analysis of the ore is as follows:

| | **Fe** | **Al** | **Mn** | **Th** | **Ce** | **Nb** | **Ta** | **Ti** |
|---|---|---|---|---|---|---|---|---|
| Mineral composition | 34.1% | 4.2% | 4.4% | 0.26% | 0.86% | 2.6% | 0.06% | 2.3% |

The dry ore is inserted into a reactor containing 623 g of distilled water and 63.5 g of 96% sulphuric acid, an amount of acid necessary to observe a ratio of 400 kg of acid per tonne of dry ore. The slurry thus obtained has a solid content of 18%.

Gaseous SO₂ is added, so as to bring the potential down to 640 mV Ag/AgCl in the first minutes of the test. The flow rate of reducing agent selected for this test is 3 SI/h.

The mixture is mechanically stirred at 90°C for 6 hours, preferably using a turbine which makes possible good diffusion of the gas, for example of the Rushton type.

At the end of the test, the slurry is centrifuged and the atmospheric leachate is recovered. The centrifuging deposit is washed with a weight of aqueous wash liquor/weight of wet residue ratio of 10. After a second centrifuging, the aqueous wash liquor is separated and the solid is dried in an oven at 105°C.

The following results are then obtained:

| | **Fe** | **Al** | **Mn** | **Th** | **Ce** | **Nb** | **Ta** | **Ti** |
|---|---|---|---|---|---|---|---|---|
| Final residue (% w/w) | 32.1% | 4.9% | 0.40% | 0.37% | 1.2% | 3.9% | 0.05% | 3.3% |
| Leachate (g/l) | 30 | 2.7 | 9.7 | 0.094 | 0.23 | 0.014 | <0.01 | 0.12 |
| Aqueous wash liquor (g/l) | 2.2 | 0.20 | 0.68 | 0.004 | 0.02 | 0.004 | <0.01 | 0.003 |

The dissolution yields, calculated with regard to the Liquid/(Liquid + Solid) distribution, are as follows:

| | **Fe** | **Al** | **Mn** | **Th** | **Ce** | **Nb** | **Ta** | **Ti** |
|---|---|---|---|---|---|---|---|---|
| Liq/(Liq + Sol) distribution yields | 37% | 25% | 94% | 13% | 11% | 0.3% | - | 2.0% |

The weight loss during this leaching is 35%.

The ferrous cocurrentwise leaching makes it possible to reduce from 85 to 90% of the iron dissolved in the ferric form into the ferrous form. The reduction of the ferric iron into ferrous iron results in a precipitation of the niobium and tantalum which had been dissolved in the ferric medium (see Example α), as is shown by the low concentrations found in the filtrate, 14 mg/l of Nb and < 10 mg/l of Ta.

A residue more concentrated in niobium/tantalum/rare earth elements than the ore is then obtained, which residue can, for example, be treated by an acid roasting stage described in the preceding examples.

### Example 6: Ferrous and ferric countercurrentwise leaching (Figure 2B2)

350 g of ore are introduced into a 2 l glass reactor containing 945 g of distilled water and 950 ml of aggressive ferric leaching filtrate (with an H⁺ concentration of 3.8 mol/l) recycled after liquid/solid separation.

In this way, a slurry with an initial solid content of 13% containing 500 kg of sulphuric acid per tonne of ore treated is obtained.

SO₂ is bubbled into the slurry and dissolved by mechanical stirring with a Rushton turbine. After reaction at 90°C for 6 hours, the solid residue is separated from the atmospheric leachate by centrifuging. This is thus a test on ferrous leaching of the type of that presented in Example γ.

On conclusion of the ferrous leaching, aweight loss of 31% is obtained, along with the following results:

| **Amounts** | **Contents** | **Fe** | **Al** | **Mn** | **Th** | **Ce** | **Nb** |
|---|---|---|---|---|---|---|---|
| 241 g | Final residue (%w/w) | 26.5% | 4.9% | 0.4% | 0.27% | 0.76% | 3.2% |
| 1676 ml | Leachate (g/l) | 26 | 14.8 | 2.4 | 1.5 | 4.3 | 0.23 |
| 3821 ml | Aqueous wash liquor (g/l) | 5.7 | 3.3 | 0.56 | 0.35 | 1.54 | 0.056 |

| **Dissolution yields** | **Weight loss** | **Fe** | **Al** | **Mn** | **Th** | **Ce** | **Nb** |
|---|---|---|---|---|---|---|---|
| Liquid/(Liquid + Solid) distribution | 31% | 59% | 49% | 90% | 18% | 11% | 1.6% |

After centrifuging the ferrous leaching slurry, the filtrate is recovered in order to be sent to the downstream process in order to extract therefrom the dissolved metals of value.

A portion of the residue (361 g, unwashed) is, for its part, inserted into a second reactor containing 82 g of distilled water and 160 g of acid, so as to observe a solid content of 24% and an amount of acid of 1036 kg per tonne of dry ferrous leaching residue. The aggressive ferric leaching stage is the only stage where pure concentrated acid is introduced.

The combined mixture is mechanically stirred for 6 hours and maintained at 90°C. The leaching takes place without SO₂.

On conclusion of the aggressive ferric leaching, a weight loss of 66% is obtained, along with the following results:

| **Amounts** | **Contents** | **Fe** | **Al** | **Mn** | **Th** | **Ce** | **Nb** |
|---|---|---|---|---|---|---|---|
| 49 g | Final residue (%w/w) | 11.5% | 6.2% | 0.8% | 0.48% | 2.0% | 5.1% |
| 183 ml | Filtrate (g/l) | 155 | 15 | 4 | 0.66 | 1.28 | 5.0 |
| 363 ml | Aqueous wash liquor (g/l) | 16 | 1.37 | 0.54 | 0.06 | 0.16 | 0.31 |

| **Dissolution yields** | **Weight loss** | **Fe** | **Al** | **Mn** | **Th** | **Ce** | **Nb** |
|---|---|---|---|---|---|---|---|
| Liquid/(Liquid + Solid) distribution | 66% | 77% | 37% | 59% | 25% | 15% | 27% |

The overall weight loss after these two leachings is (1-31%) x (1-66%) = 77%, which is equivalent to the weight loss obtained after an aggressive ferric cocurrentwise leaching.

After liquid/solid separation, the filtrate is recovered in order to be recycled to the ferrous leaching, while the residue (unwashed) is roasted.

It should be noted that these two successive leachings made it possible to increase the niobium content of the solid from 1.8%, initial content of the ore, to 3.2% in the ferrous leaching residue and up to 5.1% in the ferric leaching residue feeding the roasting kiln.

### Counterexample 6: a. Indirect acid roasting of a concentrate without a source of iron

### b. Dissolution of the calcine without a source of iron

The elements of value present in the pyrochlore ore were concentrated by a cocurrentwise leaching as described in Example α.

After washing and drying, 78 g of residue are obtained, the analysis of which is as follows:

| | **Fe** | **Al** | **Mn** | **Th** | **Ce** | **Nb** | **Ta** | **Ti** |
|---|---|---|---|---|---|---|---|---|
| Composition of the leaching residue to be roasted (% w/w) | 9.9% | 4.1% | 1.2% | 0.31% | 1.6% | 4.9% | 0.19% | 5.3% |

The cocurrentwise leaching stage has thus made it possible to increase the niobium content from 2.4 to 5.0%.

The residue is subsequently ground, in order to obtain a particle size such that 100% of grains pass through a 10 micron sieve, and is then roasted as a mixture with 121 g of 96% sulphuric acid and 210 g of distilled water, so as to observe an acid/material to be roasted ratio of 1500 kg/t and a solids content of 26% for the slurry participating in the roasting. The Fe/(Nb+Ta) molar ratio in the charge in the roasting is 3.3 mol/mol.

After roasting at 300°C for 4 hours, 153 g of calcine are obtained, which product is introduced into a reactor with 155 g of distilled water at 90°C; the water/"weight of residue in the charge to be roasted" ratio is thus 2. The combined mixture is maintained at 90°C and mechanically stirred for 2 hours. After centrifuging the slurry and washing the centrifuging deposit, the residue is dried in an oven at 105°C.

The following are then obtained:

| | **Fe** | **Al** | **Mn** | **U** | **Th** | **Ce** | **Nb** | **Ta** | **Ti** |
|---|---|---|---|---|---|---|---|---|---|
| Final residue (% w/w) | 1.7% | 0.68% | 0.16% | 0.01% | 0.12% | 0.53% | 6.2% | 0.26% | 4.6% |
| Filtrate (g/l) | 26 | 15 | 2.4 | 0.25 | 1.5 | 4.3 | 0.23 | 0.012 | 8.1 |
| Aqueous wash liquor (g/l) | 5.7 | 3.3 | 0.56 | 0.060 | 0.35 | 1.5 | 0.056 | 0.012 | 0.35 |

i.e., the following extraction yields (calculated with regard to the solid):

| | **Fe** | **Al** | **Mn** | **U** | **Th** | **Ce** | **Nb** | **Ta** | **Ti** |
|---|---|---|---|---|---|---|---|---|---|
| Yields calculated with regard to analyses of the solids | 90% | 90% | 92% | 92% | 78% | 81% | 27% | 21% | 49% |

A filtrate comprising only 26 g/l of iron does not make it possible to efficiently dissolve the niobium and the tantalum (< 30%).

In contrast, the uranium and the cerium were well dissolved.

### Example 7: a. Indirect acid roasting of a concentrate without a source of iron

### b. Dissolution of the calcine with a source of iron (synthetic salts)

The elements of value present in the pyrochlore ore were concentrated by a cocurrentwise leaching as described in Example α.

After washing and drying, 115 g of residue are obtained, the analysis of which is as follows:

| | **Fe** | **Al** | **Mn** | **U** | **Th** | **Ce** | **Nb** | **Ta** | **Ti** |
|---|---|---|---|---|---|---|---|---|---|
| Composition of the leaching residue to be roasted (% w/w) | 9.1% | 4.5% | 0.84% | 0.09% | 0.49% | 1.9% | 5.1% | 0.17% | 6.3% |

Analogously to Counterexample 6, the residue is subsequently ground, in order to obtain a particle size such that 100% of the grains pass through a 10 micron sieve, and is then roasted as a mixture with 181 g of 96% acid and 321 g of distilled water, so as to observe an acid/material to be roasted ratio of 1510 kg/t and a solids content of 19% for the slurry participating in the roasting. The Fe/(Nb+Ta) molar ratio in the charge is 2.9 mol/mol.

After roasting at 300°C for 4 hours, 243 g of calcine are obtained, which product is introduced into a reactor with 267 g of distilled water at 90°C; the water/"weight of residue in the charge in the roasting" ratio is thus 2.3. 118 g of synthetic ferric sulphate Fe₂(SO₄)₃ are also added in order to observe a ferric sulphate/leaching residue before roasting ratio = 1000 kg/t. The combined mixture is maintained at 90°C and mechanically stirred for 2 hours. After centrifuging the slurry and washing the centrifuging deposit, the residue is dried in an oven at 105°C.

The following results are then obtained:

| | **Fe** | **Al** | **Mn** | **U** | **Th** | **Ce** | **Nb** | **Ta** | **Ti** |
|---|---|---|---|---|---|---|---|---|---|
| Final residue (% w/w) | 2.9% | 0.57% | 0.07% | 0.0045% | 0.05% | 0.30% | 4.4% | 0.18% | 3.9% |
| Filtrate (g/l) | 87 | 12 | 2.3 | 0.24 | 1.2 | 4.3 | 9.5 | 0.35 | 12 |
| Aqueous wash liquor (g/l) | 12 | 1.5 | 0.31 | 0.03 | 0.18 | 0.84 | 0.57 | 24 | 1.1 |

i.e. the following extraction yields (calculated with regard to the distribution):

| | **Fe** | **Al** | **Mn** | **U** | **Th** | **Ce** | **Nb** | **Ta** | **Ti** |
|---|---|---|---|---|---|---|---|---|---|
| Yields calculated with regard to the Liq/(Liq+Sol) distribution | 96% | 94% | 96% | 97% | 95% | 92% | 58% | 56% | 67% |

The acid roasting of a cocurrentwise leaching residue followed by the dissolution of the calcine in a ferric medium (iron having being added after the roasting) made it possible to double the extracting yields for niobium and tantalum with respect to a dissolution of the calcine in water (see Counterexample 6). The extraction yields for the uranium and cerium were also improved (> 90%).

### Example 8: a. Indirect acid roasting of a concentrate with a source of iron (synthetic salts)

### b. Dissolution of the calcine

A cocurrentwise leaching was carried out according to the protocol presented in Example α.

The residue obtained (158 g) was washed, dried and then ultrafinely ground, so that 100% of the grains pass through a 10 micron sieve. The chemical analysis of this residue is given below:

| | **Fe** | **Al** | **Mn** | **Th** | **Ce** | **Nb** | **Ta** | **Ti** |
|---|---|---|---|---|---|---|---|---|
| Composition of the leaching residue to be roasted (% w/w) | 10.1% | 3.9% | 1.2% | 0.48% | 1.7% | 4.0% | 0.11% | 4.9% |

This residue was subsequently mixed in a porcelain crucible with 248 g of sulphuric acid and 161 g of ferric sulphate Fe₂(SO₄)₃ crystals, in order to observe respective ratios of 1500 and 1000 kg per tonne of leaching residue treated. The Fe/(Nb+Ta) and PO₄/(Nb+Ta) molar ratios in the charge are respectively 16 mol/mol and 2.4 mol/mol.

After addition of 190 g of distilled water and homogenization of the combined mixture, the crucible is inserted into the roasting kiln heated to 300°C for 4 hours.

The resulting calcine is then dissolved in 318 g of water heated to 90°C, for 2 hours, in the presence of SO₂.

The results obtained are as follows:

| | **Fe** | **Al** | **Mn** | **Th** | **Ce** | **Nb** | **Ta** | **Ti** |
|---|---|---|---|---|---|---|---|---|
| Final residue (% w/w) | 1.8% | 0.35% | 0.04% | 0.04% | 0.32% | 3.3% | 0.15% | 1.8% |
| Filtrate (g/l) | 82 | 10 | 1.7 | 1.1 | 3.8 | 10 | 0.34 | 10 |
| Aqueous wash liquor (g/l) | 7.6 | 0.92 | 0.17 | 0.12% | 0.66 | 0.12 | 0.003 | 0.73 |

i.e., the following extraction yields (calculated with regard to the distribution):

| | **Fe** | **Al** | **Mn** | **Th** | **Ce** | **Nb** | **Ta** | **Ti** |
|---|---|---|---|---|---|---|---|---|
| Yields calculated with regard to Liq/(Liq+Sol) distribution | 98% | 97% | 98% | 97% | 93% | 77% | 71% | 87% |

The acid roasting of a cocurrentwise leaching residue in the presence of a source of iron makes it possible to increase the extraction yields with respect to Example 7, where the source of ferric sulphate is introduced during the dissolution of the calcine.

### Example 9: a. Indirect acid roasting without recycling and without grinding

### b. Dissolution of the calcine

A pyrochlore ore is treated by a cocurrentwise atmospheric leaching as described in Example α.

At the end of the leaching, the slurry is centrifuged, so as to recover the filtrate (97 ml) and a centrifuging deposit comprising the solid residue (48.5 g) impregnated with a liquid having the same composition as the filtrate (213 ml). The solid content of the impregnated residue is thus 12.4%. The total amount of iron present in the impregnating liquid is then 529 kg per tonne of dry leaching residue (i.e., 1890 kg/t of ferric sulphate). The Fe/(Nb+Ta) and PO₄/(Nb+Ta) molar ratios in the charge are respectively 19 mol/mol and 5.5 mol/mol.

The composition of the leachate is as follows:

| | **Fe** | **Al** | **Mn** | **U** | **Th** | **Ce** | **Nb** | **Ta** | **Ti** |
|---|---|---|---|---|---|---|---|---|---|
| Composition of the leaching residue to be roasted (% w/w) | 9.0% | 4.7% | 1.0% | 0.08% | 0.47% | 2.0% | 5.1% | 0.20% | 5.9% |
| Composition of the impregnating liquid of the said residue (g/l) | 111 | 16 | 8.1 | 0.35 | 0.54 | 0.70 | 3.7 | 0.20 | 1.6 |

86g of 96% concentrated sulphuric acid and 21 g of distilled water are added to this impregnated residue in a porcelain crucible, so as to obtain an acid/material to be roasted ratio of 1697 kg/t and a solid content of 10% for the slurry participating in the roasting.

After manual homogenization, the combined mixture is roasted at 300°C for 4 hours.

The 296 g of calcine obtained are dissolved in 110 g of water, i.e. at a water/"initial residue in the charge to be roasted" ratio = 2.3, for 2 hours, in the presence of SO₂, at a constant temperature of 90°C.

After centrifuging the slurry and washing and then drying the residue, 16.5 g of attack residue, i.e. a weight loss during the roasting at 66%, and 80 ml of filtrate are obtained. The compositions are as follows:

| | **Fe** | **Al** | **Mn** | **U** | **Th** | **Ce** | **Nb** | **Ta** | **Ti** |
|---|---|---|---|---|---|---|---|---|---|
| Final residue (% w/w) | 2.0% | 0.36% | 0.35% | 0.01% | 0.06% | 0.34% | 1.1% | 0.05% | 1.3% |
| Filtrate (g/l) | 139 | 21 | 19 | 0.53 | 1.5 | 4.7 | 14 | 0.52 | 14 |
| Aqueous wash liquor (g/l) | 12 | 1.7 | 1.5 | 0.037 | 0.11 | 0.35 | 0.35 | 0.024 | 0.78 |

The extraction yields, calculated with regard to the distribution, are as follows:

| | **Fe** | **Al** | **Mn** | **U** | **Th** | **Ce** | **Nb** | **Ta** | **Ti** |
|---|---|---|---|---|---|---|---|---|---|
| Yields calculated with regard to Liq/(Liq+Sol) distribution | 99% | 99% | 99% | 98% | 97% | 95% | 95% | 94% | 94% |

The iron concentration of the roasting leachate is particularly high (139 g/l) and makes it possible to obtain excellent dissolution of the niobium, tantalum, uranium and cerium.

The two filtrates thus obtained, that is to say the atmospheric leaching filtrate and the filtrate from the dissolution of the calcine, are then mixed, so as to obtain a single stream, which is intended to be treated downstream in order to recover the niobium, tantalum, uranium and rare earth elements.

The composition of the mixture of the two leachates is as follows:

| | **Fe** | **Al** | **Mn** | **U** | **Th** | **Ce** | **Nb** | **Ta** | **Ti** |
|---|---|---|---|---|---|---|---|---|---|
| Mixture of filtrates (g/l) | 136 | 18 | 13 | 0.82 | 0.95 | 2.5 | 7.6 | 0.33 | 6.7 |

The indirect roasting makes it possible to achieve overall extraction yields (leaching and roasting) of 96% for the niobium, 94% for the tantalum, 99% for the uranium and 96% for the cerium.

### Example 10: a. Indirect acid roasting without recycling and without grinding

### b. Dissolution of the calcine

A pyrochlore ore is treated by a ferrous cocurrentwise atmospheric leaching as described in Example γ.

At the end of the leaching, the slurry is centrifuged, so as to recover the filtrate (425 ml). The centrifuging deposit is washed by reslurrying before being centrifuged, so as to obtain an aqueous wash liquor and a wet residue. The wet residue is dried in an oven at 105°C.

The composition of the leachate is as follows:

| | **Fe** | **Al** | **Mn** | **Th** | **Ce** | **Nb** | **Ta** | **Ti** | **H⁺** |
|---|---|---|---|---|---|---|---|---|---|
| Composition of the atmospheric leachate (g/l) | 30 | 2.7 | 9.7 | 0.09 | 0.23 | 0.014 | 0.010 | 0.12 | 0.6N |

The composition of the residue which feeds the roasting is as follows:

| | **Fe** | **Al** | **Mn** | **Th** | **Ce** | **Nb** | **Ta** | **Ti** |
|---|---|---|---|---|---|---|---|---|
| Composition of the leaching residue to be roasted (% w/w) | 32% | 4.9% | 0.40% | 0.37% | 1.2% | 3.4% | 0.05% | 3.32% |

The dry residue (71 g) is roasted, so as to obtain a calcine; the Fe/(Nb+Ta) molar ratio in the charge is 13 mol/mol. The calcine is subsequently taken up in water, the protocol of Example 3 being followed.

After centrifuging the slurry, the following results are obtained:

| | **Fe** | **Al** | **Mn** | **Th** | **Ce** | **Nb** | **Ta** | **Ti** | **H⁺** |
|---|---|---|---|---|---|---|---|---|---|
| Final residue (% w/w) | 22% | 0.66% | 0.42% | 0.17% | 0.51% | 5.7% | 0.16% | 5.5% | - |
| Leachate (g/l) | 115 | 20 | 1.5 | 1.4 | 4.1 | 12.5 | 0.30 | 9.3 | 3.7N |
| Aqueous wash liquor (g/l) | 3.6 | 0.65 | 0.054 | 0.044 | 0.17 | 0.01 | 0.01 | 0.14 | - |

The extraction yields subsequent to the roasting stage, calculated with regard to the distribution, are shown in the following table:

| | **Fe** | **Al** | **Mn** | **Th** | **Ce** | **Nb** | **Ta** | **Ti** |
|---|---|---|---|---|---|---|---|---|
| Yields calculated with regard to Liq/(Liq+Sol) distribution | 82% | 96% | 75% | 87% | 88% | 64% | 62% | 59% |

The extraction yields are lower than those presented in Example 9 as the Fe concentration at the dissolution step is lower (115 g/l of Fe instead of 139 g/l of Fe) and the Fe/(Nb+Ta) ratio during the roasting is lower. Furthermore, the leaching carried out on the ore is less aggressive than that presented in Example 9, with the result that the matrix is not attacked so well, which does not facilitate the roasting stage.

The ferrous leachate originating from the atmospheric leaching (comprising essentially U and RE) can optionally be mixed with the roasting leachate (comprising Nb, Ta, U and RE) diluted two fold with water, so as to obtain a single stream intended to be treated in the downstream process. It should be noted that, during the dilution, precipitation of the elements of value is not observed; in particular, precipitation of niobium or tantalum is not observed.

The composition of the mixture is then as follows:

| | **Fe** | **Al** | **Mn** | **Th** | **Ce** | **Nb** | **Ta** | **Ti** | **H⁺** |
|---|---|---|---|---|---|---|---|---|---|
| Mixture of filtrates (g/l) | 52 | 7.2 | 7.5 | 0.42 | 1.3 | 3.3 | 0.090 | 2.5 | 1.4N |

### Example 11: a. Indirect acid roasting without recycling and with grinding

### b. Dissolution of the calcine

A pyrochlore ore is treated by a ferrous cocurrentwise atmospheric leaching as described in Example γ.

At the end of the leaching, the slurry is centrifuged, so as to recover the filtrate (2745 ml). The centrifuging deposit is washed by reslurrying, before being recentrifuged, so as to obtain an aqueous wash liquor and a wet residue. The wet residue is dried in an oven at 105°C.

The residue is subsequently ultrafinely ground, so as to obtain a particle size such that 100% of the grains pass through a 10 micron sieve. The analysis of the leaching residue before roasting corresponds to:

| | **Fe** | **Al** | **Mn** | **Th** | **Ce** | **Nb** | **Ta** | **Ti** |
|---|---|---|---|---|---|---|---|---|
| Composition of the leaching residue to be roasted (% w/w) | 31% | 5.3% | 0.41% | 0.29% | 1.2% | 3.3% | 0.07% | 0.31% |

The dry residue is roasted, so as to obtain a calcine which is taken up in water, the protocol of Example 3 being followed. The Fe/(Nb+Ta) molar ratio in the charge in the roasting is 15 mol/mol.

In this way, the following results are obtained

| | **Fe** | **Al** | **Mn** | **Th** | **Ce** | **Nb** | **Ta** | **Ti** |
|---|---|---|---|---|---|---|---|---|
| Final residue (% w/w) | 8.9% | 0.97% | 0.25% | 0.10% | 0.47% | 4.0% | 0.12% | 0.39% |
| Filtrate (g/l) | 123 | 23 | 1.5 | 0.33 | 3.5 | 12 | 0.33 | 10.2 |
| Aqueous wash liquor (g/l) | 3.5 | 0.71 | 0.05 | 0.06 | 0.63 | 0.02 | 4.8 | 0.16 |

The extraction yields subsequent to the roasting stage, calculated with regard to the distribution, are shown in the following table:

| | **Fe** | **Al** | **Mn** | **Th** | **Ce** | **Nb** | **Ta** | **Ti** |
|---|---|---|---|---|---|---|---|---|
| Yields calculated with regard to Liq/(Liq+Sol) distribution | 95% | 97% | 89% | 86% | 93% | 79% | 78% | 97% |

The ultrafine grinding stage has made it possible to increase the extraction yields for the niobium and tantalum by 15% with respect to Example 10.

The ferrous leachate originating from the atmospheric leaching can optionally be mixed with the roasting leachate diluted by a factor of 1.8, so as to obtain a single stream intended to be treated in the downstream process.

The composition of the mixture is then as follows:

| | **Fe** | **Al** | **Mn** | **Th** | **Ce** | **Nb** | **Ta** | **Ti** |
|---|---|---|---|---|---|---|---|---|
| Mixture of filtrates (g/l) | 43 | 4.7 | 9.2 | 0.11 | 0.54 | 1.1 | 0.03 | 1.1 |

### Example 12: a. Indirect acid roasting

### b. Dissolution of the calcine

After a ferrous and ferric countercurrentwise leaching as described in Example δ, 219 g of an unwashed residue, containing 62 g of dry residue and 157 g of aggressive ferric leaching filtrate (i.e., 330 kg of ferric sulphate per tonne of dry leaching residue), are obtained, which product is inserted into a porcelain crucible and then mixed with 85 g of concentrated sulphuric acid (ratio of 1370 kg of acid per tonne of dry residue). The combined mixture is roasted at 300°C for 4 hours in order to obtain a calcine, which is dissolved under the conditions described in Example 8. The Fe/(Nb+Ta) molar ratio in the charge in the roasting is 15 mol/mol.

| | **Fe** | **Al** | **Mn** | **Th** | **Ce** | **Nb** | **Ta** | **Ti** |
|---|---|---|---|---|---|---|---|---|
| Composition of the leaching residue to be roasted (% w/w) | 11.3% | 6.6% | 0.56% | 0.50% | 2.0% | 6.4% | 0.17% | 5.8% |
| Composition of the impregnating liquid (g/l) | 59 | 4.0 | 1.6 | 0.17 | 0.36 | 1.7 | 0.061 | 0.86 |

After centrifuging the slurry obtained on conclusion of the 2 hours of dissolution of the calcine, the ferric filtrate comprising the majority of the elements of value can be treated in order to separate the niobium and tantalum, before being recycled at the start of the countercurrentwise leaching.

The residue is washed by reslurrying at ambient temperature for 20 minutes. The extraction yields obtained are as follows:

| Amounts | Contents | **Fe** | **Al** | **Th** | **Ce** | **Nb** | **Ta** |
|---|---|---|---|---|---|---|---|
| 28 g | Residue after roasting (%w/w) | 5.2% | 0.76% | 0.10% | 0.38% | 4.2% | 0.14% |
| 117 ml | Filtrate (g/l) | 118 | 42 | 2.5 | 11 | 30 | 0.61 |
| 138 ml | Aqueous wash liquor (g/l) | 15 | 5.9 | 0.35 | 1.7 | 3.2 | 0.047 |

| **Dissolution yields** | **Weight loss** | **Fe** | **Al** | **Th** | **Ce** | **Nb** | **Ta** |
|---|---|---|---|---|---|---|---|
| Liquid/(Liquid + Solid) distribution | 55% | 92% | 96% | 92% | 93% | 77% | 66% |

The only liquid exit from this example takes place at the end of the ferrous leaching with a 90% ferrous stream which comprises virtually all the uranium and rare earth elements.

## Claims

1. A process for the dissolution of at least one element chosen from niobium and tantalum and of at least one other element chosen from uranium and rare earth elements, advantageously for the dissolution of niobium, tantalum, uranium and rare earth elements, present in an ore or an ore concentrate, **characterized in that** it comprises:
- the roasting of a material, comprising said elements, which material is mixed, dry or in the presence of water, with an acidic roasting agent in order to obtain a calcine; said material consisting of said ore or concentrate or having been obtained from said ore or said concentrate and said acidic roasting agent providing for roasting in a sulphate medium; and
- the dissolution in an aqueous solution of the calcine obtained in order to obtain a slurry, the liquid fraction of which includes iron, in the ferric state, at a concentration of at least 50 g/l, advantageously of at least 70 g/l and very advantageously of at least 120 g/l.

2. The process according to claim 1, **characterized in that** the iron present in said slurry was present in said calcine and/or was added, at least in part, in the liquid and/or solid form, to said calcine.

3. The process according to claim 1 or 2, **characterized in that** the dissolution of the calcine is carried out without any addition of sulphuric acid.

4. The process according to any one of claims 1 to 3, **characterized in that** the dissolution of the calcine is carried out with addition of a reducing agent, such as SO₂.

5. The process according to any one of claims 1 to 4, **characterized in that** the roasting, a solid/liquid reaction, is an acid roasting.

6. The process according to any one of claims 1 to 4, **characterized in that** the roasting, a gas/solid reaction, is a sulphation roasting.

7. The process according to any one of claims 1 to 6, characterized that said roasting is carried out in the presence of iron, in the ferric form, advantageously present at an Fe/(Nb+Ta) molar ratio of greater than 2, very advantageously of greater than 3.5 and preferably of greater than 6; said iron being already present in the material to be roasted and/or having been added, at least in part, in the liquid and/or solid form, to said material to be roasted.

8. The process according to any one of claims 1 to 7, **characterized in that** the roasting is carried out in the presence of phosphate, advantageously present at a PO₄/(Nb + Ta) molar ratio of greater than 2 and very advantageously of greater than 6; said phosphate being already present in the material to be roasted and/or having been added, at least in part, in the liquid and/or solid form, to said material to be roasted.

9. The process according to any one of claims 1 to 8, **characterized in that** it additionally comprises, upstream of said roasting:
- a physical enrichment and/or a chemical treatment of the ore or concentrate.

10. The process according to any one of claims 1 to 9, **characterized in that** it additionally comprises, upstream of said roasting:
- an acid leaching, advantageously a sulphuric acid atmospheric leaching; said leaching being carried out on an ore or concentrate, optionally physically enriched.

11. The process according to claim 10, **characterized in that** it additionally comprises, upstream of the roasting:
A) a leaching, in a single stage, cocurrentwise, in the presence of sulphuric acid, followed by a solid/liquid separation which produces a leachate and a leaching residue to be roasted; or
B) a leaching, in two stages, countercurrentwise, comprising a first leaching stage, followed by a solid/liquid separation which produces a leachate and a first leaching residue, and a second leaching stage carried out on said first leaching residue, in the presence of sulphuric acid, followed by a solid/liquid separation which produces a second leaching residue to be roasted and a liquid to be advantageously recycled to said first leaching stage.

12. The process according to claim 10 or 11, **characterized in that** it additionally comprises, upstream of the roasting:
A1) a leaching, in a single stage, cocurrentwise, at a potential of greater than 500 mV Ag/AgCl and advantageously of greater than or equal to 600 mV Ag/AgCl, in the presence of H₂SO₄ and optionally of a make-up of at least one reducing agent, followed by a solid/liquid separation which produces a ferric leachate and a leaching residue to be roasted;
A2) a leaching, in a single stage, cocurrentwise, at a potential of less than 500 mV Ag/AgCl and advantageously of less than or equal to 450 mV Ag/AgCl, in the presence of H₂SO₄ and of at least one reducing agent, followed by a solid/liquid separation which produces a ferrous leachate and a leaching residue enriched in niobium and/or tantalum to be roasted;
B1) a leaching, in two stages, countercurrentwise, comprising a first leaching stage, at a potential of greater than 500 mV Ag/AgCl and advantageously of greater than or equal to 600 mV Ag/AgCl, in the presence of H₂SO₄ and optionally of a make-up of at least one reducing agent, followed by a solid/liquid separation which produces a ferric leachate and a first leaching residue, and a second leaching stage carried out on said first leaching residue, either at a potential of greater than 500 mV Ag/AgCo and advantageously of greater than or equal to 600 mV Ag/AgCl, in the presence of H₂SO₄ and optionally of a make-up of at least one reducing agent, or at a potential of less than 500 mV Ag/AgCl and advantageously of less than or equal to 450 mV Ag/AgCl, in the presence of H₂SO₄ and of at least one reducing agent, followed by a solid/liquid separation which produces a second leaching residue to be roasted and a liquid with residual acidity to be advantageously recycled to said first leaching stage;
B2) a leaching, in two stages, countercurrentwise, comprising a first leaching stage, at a potential of less than 500 mV Ag/AgCl and advantageously of less than 450 mV Ag/AgCl, in the presence of H₂SO₄ and of at least one reducing agent, followed by a solid/liquid separation which produces a ferrous leachate and a first leaching residue, and a second leaching stage carried out on said first leaching residue, either at a potential of greater than 500 mV Ag/AgCl and advantageously of greater than or equal to 600 mV Ag/AgCl, in the presence of H₂SO₄ and optionally of a make-up of at least one reducing agent, or at a potential of less than 500 mV Ag/AgCl and advantageously of less than or equal to 450 mV Ag/AgCl, in the presence of H₂SO₄ and of at least one reducing agent, followed by a solid/liquid separation which produces a second leaching residue enriched in niobium and/or tantalum to be roasted and a liquid to be advantageously recycled to said first leaching stage; said advantageously recycled liquid being recycled as it is or after separation, at least partial, from the niobium and/or tantalum present therein.

13. The process according to claim 12, **characterized in that** said leaching is of A2) or B2) type, advantageously of B2) type.

14. The process according to any one of claims 1 to 13, **characterized in that** it additionally comprises, upstream of said roasting:
- an ultrafine grinding of the material to be roasted, for the production of said material at a particle size ≤ 30 µm, advantageously ≤ 15 µm and very advantageously ≤ 10 µm.

15. The process according to any one of claims 1 to 14, **characterized in that** it additionally comprises, downstream of said dissolution:
- a solid/liquid separation carried out directly on the slurry or after an additional stage of dilution of said slurry by a limited factor, advantageously ≤ 5, in order to prevent the precipitation of the dissolved elements; said solid/liquid separation producing a solid attack residue and a roasting leachate including said dissolved elements.

16. The process according to claim 15, **characterized in that** it additionally comprises, downstream of said dissolution:
- the separation of the niobium and/or tantalum from said roasting leachate and advantageously the recycling of said leachate, from which said niobium and/or tantalum was/were separated, optionally diluted, for the implementation of a sulphuric acid atmospheric leaching according to any one of claims 10 to 13.

17. The process according to any one of claims 11 to 16, **characterized in that** it comprises:
- a leaching of A1, A2, B1 or B2 type according to claim 12 and the recovery of a leachate and of a leaching residue;
- an optional ultrafine grinding of said leaching residue;
- the roasting of said optionally ground leaching residue;
- the dissolution of the calcine obtained on conclusion of said roasting, in order to obtain a slurry;
- a liquid/solid separation, carried out directly on said slurry or on said slurry diluted by a limited factor, which produces a solid attack residue and a roasting leachate including the desired elements;
- the separation of the niobium and/or tantalum from said roasting leachate and the recycling of the leachate, from which said niobium and/or tantalum was/were previously separated, which is optionally diluted, for the implementation of said leaching.

18. The process according to any one of claims 11 to 16, **characterized in that** it comprises:
- a desliming of an ore or ore concentrate, which is optionally physically enriched, for the recovery, on the one hand, of slimes including iron and, on the other hand, of the deslimed ore or concentrate;
- a leaching of A1, A2, B1 or B2 type according to claim 12 carried out on said deslimed ore or concentrate, optionally with addition of a portion of the slimes recovered in step 1 above, and the recovery of a leachate and of a leaching residue;
- an optional ultrafine grinding of the leaching residue;
- the roasting of said optionally ground leaching residue, carried out with addition of iron *via* another portion of the slimes recovered in step 1 above;
- the dissolution of the calcine obtained on conclusion of said roasting, in order to obtain a slurry;
- a liquid/solid separation, carried directly on said slurry or on said slurry diluted by a limited factor, which produces an attack residue and a roasting leachate including the desired elements;
- the separation of the niobium and/or tantalum from said roasting leachate and the recycling of said roasting leachate, from which said niobium and tantalum was/were previously separated, which is optionally diluted, for the implementation of said leaching.

19. The process according to any one of claims 1 to 18, **characterized in that** it is carried out with an ore or ore concentrate; the ore concerned being chosen from the minerals of the pyrochlore, euxenite, samarskite, perovskite and fergusonite groups and their mixtures.

20. A process for the recovery of at least one element chosen from niobium and tantalum and of at least one other element chosen from uranium and the rare earth elements, advantageously for the recovery of niobium, tantalum, uranium and rare earth elements, present in an ore or an ore concentrate, **characterized in that** it comprises:
- the dissolution of said elements according to the process of any one of claims 1 to 19; and
- the separation of said elements.

## Patentansprüche

1. Verfahren zur Auflösung mindestens eines Elements ausgewählt aus Niob und Tantal und mindestens eines anderen Elements ausgewählt aus Uran und Seltenerdelementen, vorteilhafterweise zur Auflösung von Niob, Tantal, Uran und Seltenerdelementen, die in einem Erz oder einem Erzkonzentrat vorliegen, **dadurch gekennzeichnet, dass** es umfasst:
- die Röstung eines die Elemente enthaltenden Materials, welches trocken oder in Anwesenheit von Wasser mit einem sauren Röstmittel gemischt wird, um ein calciniertes Produkt zu erhalten, wobei das Material aus dem Erz oder Konzentrat besteht oder aus dem Erz oder dem Konzentrat erhalten worden ist, und das saure Röstmittel für die Röstung in einem Sulfatmedium sorgt, und
- die Auflösung des erhaltenen calcinierten Produkts in einer wässrigen Lösung, um eine Aufschlämmung, deren flüssiger Anteil Eisen in Eisen(III)-Form enthält, mit einer Konzentration von mindestens 50 g/l, vorteilhafterweise von mindestens 70 g/l und äußerst vorteilhafterweise von mindestens 120 g/l zu erhalten.

2. Verfahren nach Anspruch 1, **dadurch gekennzeichnet, dass** das in der Aufschlämmung vorliegende Eisen in dem calcinierten Produkt vorlag und/oder mindestens teilweise in flüssiger oder fester Form dem calcinierten Produkt zugesetzt wurde.

3. Verfahren nach Anspruch 1 oder 2, **dadurch gekennzeichnet, dass** die Auflösung des calcinierten Produkts ohne Zusatz von Schwefelsäure ausgeführt wird.

4. Verfahren nach einem der Ansprüche 1 bis 3, **dadurch gekennzeichnet, dass** die Auflösung des calcinierten Produkts unter Zusatz eines Reduktionsmittels, wie z.B. SO₂, ausgeführt wird.

5. Verfahren nach einem der Ansprüche 1 bis 4, **dadurch gekennzeichnet, dass** die Röstung, eine Feststoff/Flüssigkeitsreaktion, eine Säureröstung ist.

6. Verfahren nach einem der Ansprüche 1 bis 4, **dadurch gekennzeichnet, dass** die Röstung eine Gas/Feststoffreaktion, eine Sulfatierungsröstung ist.

7. Verfahren nach einem der Ansprüche 1 bis 6, **dadurch gekennzeichnet, dass** die Röstung in Anwesenheit von Eisen in der Eisen(III)-Form ausgeführt wird, das vorteilhafterweise in einem molaren Verhältnis Fe/(Nb+Ta) größer als 2, äußerst vorteilhafterweise größer als 3,5 und bevorzugt größer als 6 vorliegt, wobei das Eisen im zu röstenden Material bereits vorliegt und/oder mindestens teilweise in flüssiger oder fester Form dem zu röstenden Material zugesetzt worden ist.

8. Verfahren nach einem der Ansprüche 1 bis 7, **dadurch gekennzeichnet, dass** die Röstung in Anwesenheit von Phosphat ausgeführt wird, das vorteilhafterweise in einem molaren Verhältnis PO₄/(Nb + Ta) größer als 2 und äußerst vorteilhafterweise größer als 6 vorliegt, wobei das Phosphat im zu röstenden Material bereits vorliegt und/oder mindestens teilweise in flüssiger oder fester Form dem zu röstenden Material zugesetzt worden ist.

9. Verfahren nach einem der Ansprüche 1 bis 8, **dadurch gekennzeichnet, dass** es der Röstung vorgelagert ferner umfasst:
- eine physikalische Anreicherung und/oder eine chemische Behandlung des Erzes oder Konzentrats.

10. Verfahren nach einem der Ansprüche 1 bis 9, **dadurch gekennzeichnet, dass** es der Röstung vorgelagert ferner umfasst:
- eine Säurelaugung, vorteilhafterweise eine atmosphärische Schwefelsäurelaugung, wobei die Laugung an einem Erz oder Konzentrat, optional physikalisch angereichert, ausgeführt wird.

11. Verfahren nach Anspruch 10, **dadurch gekennzeichnet, dass** es der Röstung vorgelagert ferner umfasst:
A) eine Laugung gleichlaufend in einem einzigen Schritt in Anwesenheit von Schwefelsäure, gefolgt von einer Feststoff/Flüssigkeits-Trennung, welche ein Abwasser und einen zu röstenden Laugungsrest erzeugt, oder
B) eine Laugung gegenlaufend in zwei Schritten mit einem ersten Laugungsschritt, gefolgt von einer Feststoff/Flüssigkeits-Trennung, welche ein Abwasser und einen ersten Laugungsrest erzeugt, und einem an dem ersten Laugungsrest in Anwesenheit von Schwefelsäure ausgeführten zweiten Laugungsschritt, gefolgt von einer Feststoff/Flüssigkeits-Trennung, welche einen zu röstenden zweiten Laugungsrest und eine vorteilhafterweise zu dem ersten Laugungsschritt wiederaufbereitete Flüssigkeit erzeugt.

12. Verfahren nach Anspruch 10 oder 11, **dadurch gekennzeichnet, dass** es der Röstung vorgelagert ferner umfasst:
A1) eine Laugung, gleichlaufend in einem einzigen Schritt bei einem Potential größer als 500 mV gegen Ag/AgCl und vorteilhafterweise größer als oder gleich 600 mV gegen Ag/AgCl in Anwesenheit von H₂SO₄ und optional eines Zusatzes mindestens eines Reduktionsmittels, gefolgt von einer Feststoff/Flüssigkeits-Trennung, welche ein Eisen(III)-Abwasser und einen zu röstenden Laugungsrest erzeugt,
A2) eine Laugung, gleichlaufend in einem einzigen Schritt bei einem Potential kleiner als 500 mV gegen Ag/AgCl und vorteilhafterweise kleiner als oder gleich 450 mV gegen Ag/AgCl in Anwesenheit von H₂SO₄ und mindestens eines Reduktionsmittels, gefolgt von einer Feststoff/Flüssigkeits-Trennung, welche ein eisenhaltiges Abwasser und einen mit Niob und/oder Tantal angereicherten, zu röstenden Laugungsrest erzeugt,
B1) eine Laugung, gegenlaufend in zwei Schritten mit einem ersten Laugungsschritt bei einem Potential größer als 500 mV gegen Ag/AgCl und vorteilhafterweise größer als oder gleich 600 mV gegen Ag/AgCl in Anwesenheit von H₂SO₄ und optional eines Zusatzes mindestens eines Reduktionsmittels, gefolgt von einer Feststoff/Flüssigkeits-Trennung, welche ein Eisen(III)-Abwasser und einen ersten Laugungsrest erzeugt, und einem an dem ersten Laugungsrest ausgeführten zweiten Laugungsschritt, entweder bei einem Potential größer als 500 mV gegen Ag/AgCl und vorteilhafterweise größer als oder gleich 600 mV gegen Ag/AgCl in Anwesenheit von H₂SO₄ und optional eines Zusatzes mindestens eines Reduktionsmittels oder bei einem Potential kleiner als 500 mV gegen Ag/AgCl und vorteilhafterweise kleiner als oder gleich 450 mV gegen Ag/AgCl in Anwesenheit von H₂SO₄ und mindestens eines Reduktionsmittels, gefolgt von einer Feststoff/Flüssigkeits-Trennung, welche einen zu röstenden zweiten Laugungsrest und eine vorteilhafterweise zu dem ersten Laugungsschritt wiederaufzubereitende Flüssigkeit mit Restacidität erzeugt,
B2) eine Laugung, gegenlaufend in zwei Schritten mit einem ersten Laugungsschritt bei einem Potential kleiner als 500 mV gegen Ag/AgCl und vorteilhafterweise kleiner als 450 mV gegen Ag/AgCl in Anwesenheit von H₂SO₄ und mindestens eines Reduktionsmittels, gefolgt von einer Feststoff/Flüssigkeits-Trennung, welche ein eisenhaltiges Abwasser und einen ersten Laugungsrest erzeugt, und einem an dem ersten Laugungsrest ausgeführten zweiten Laugungsschritt, entweder bei einem Potential größer als 500 mV gegen Ag/AgCl und vorteilhafterweise größer als oder gleich 600 mV gegen Ag/AgCl in Anwesenheit von H₂SO₄ und optional eines Zusatzes mindestens eines Reduktionsmittels oder bei einem Potential kleiner als 500 mV gegen Ag/AgCl und vorteilhafterweise kleiner als oder gleich 450 mV gegen Ag/AgCl in Anwesenheit von H₂SO₄ und mindestens eines Reduktionsmittels, gefolgt von einer Feststoff/Flüssigkeits-Trennung, welche ein eisenhaltiges Abwasser und einen mit Niob und/oder Tantal angereicherten, zu röstenden Laugungsrest und eine vorteilhafterweise zu dem ersten Laugungsschritt wiederaufzubereitende Flüssigkeit erzeugt, wobei die vorteilhafterweise wiederaufbereitete Flüssigkeit wiederaufbereitet wird, so wie sie ist oder nach Abtrennung, mindestens teilweise, von darin vorliegendem Niob und/oder Tantal.

13. Verfahren nach Anspruch 12, **dadurch gekennzeichnet, dass** die Laugung vom A2)- oder B2)-Typ, vorteilhafterweise vom B2)-Typ ist.

14. Verfahren nach einem der Ansprüche 1 bis 13, **dadurch gekennzeichnet, dass** es der Röstung vorgelagert ferner umfasst:
- eine Feinstvermahlung des zu röstenden Materials für die Herstellung des Materials mit einer Partikelgröße ≤ 30 µm, vorteilhafterweise ≤ 15 µm und äußerst vorteilhafterweise ≤ 10 µm.

15. Verfahren nach einem der Ansprüche 1 bis 14, **dadurch gekennzeichnet, dass** es der Auflösung nachgelagert ferner umfasst:
- eine Feststoff/Flüssigkeits-Trennung, die direkt an der Aufschlämmung oder nach einem zusätzlichen Schritt der Verdünnung der Aufschlämmung mit einem begrenzten Faktor, vorteilhafterweise ≤ 5, ausgeführt wird, um die Ausfällung der gelösten Elemente zu verhindern, wobei die Feststoff/Flüssigkeits-Trennung einen festen Reaktionsrest und ein die gelösten Elemente enthaltendes Röstungsabwasser erzeugt.

16. Verfahren nach Anspruch 15, **dadurch gekennzeichnet, dass** es der Auflösung nachgelagert ferner umfasst:
- die Abtrennung des Niobs und/oder Tantals aus dem Röstungsabwasser und vorteilhafterweise die Wiederaufbereitung von besagtem Abwasser, aus welchem das Niob und/oder Tantal abgetrennt wurde/wurden, optional verdünnt, für die Durchführung einer atmosphärischen Schwefelsäurelaugung nach einem der Ansprüche 10 bis 13.

17. Verfahren nach einem der Ansprüche 11 bis 16, **dadurch gekennzeichnet, dass** es umfasst:
- eine Laugung vom A1-, A2-, B1- oder B2-Typ nach Anspruch 12 und die Rückgewinnung eines Abwassers und eines Laugungsrestes,
- eine optionale Feinstvermahlung des Laugungsrestes,
- die Röstung des optional vermahlenen Laugungsrestes,
- die Auflösung des calcinierten Produkts, das beim Abschluss der Röstung erhalten wird, um eine Aufschlämmung zu erhalten,
- eine Flüssigkeit/Feststoff-Trennung, die direkt an der Aufschlämmung oder an der mit einem begrenzten Faktor verdünnten Aufschlämmung ausgeführt wird, welche einen festen Reaktionsrest und ein die gewünschten Elemente enthaltendes Röstungsabwasser erzeugt,
- die Abtrennung des Niobs und/oder Tantals aus dem Röstungsabwasser und die Wiederaufbereitung des Abwassers, aus welchem das Niob und/oder Tantal vorher abgetrennt wurde/wurden, welches optional verdünnt ist, für die Durchführung der Laugung.

18. Verfahren nach einem der Ansprüche 11 bis 16, **dadurch gekennzeichnet, dass** es umfasst:
- 1) eine Entschlämmung eines Erzes oder Erzkonzentrats, welches optional physikalisch angereichert ist, für die Rückgewinnung einerseits von Eisen enthaltenden Schlämmen und andererseits des entschlämmten Erzes oder Konzentrats,
- 2) eine Laugung vom A1-, A2-, B1- oder B2-Typ nach Anspruch 12, die an dem entschlämmten Erz oder Konzentrat ausgeführt wird, optional unter Zusatz eines Teils der in Schritt 1 weiter oben wiederhergestellten Schlämme, und die Rückgewinnung eines Abwassers und eines Laugungsrestes,
- 3) eine optionale Feinstvermahlung des Laugungsrestes,
- 4) die Röstung des optional gemahlenen Laugungsrestes, ausgeführt unter Zusatz von Eisen über einen weiteren Teil der in Schritt 1 weiter oben wiederhergestellten Schlämme,
- 5) die Auflösung des beim Abschluss der Röstung erhaltenen calcinierten Produkts, um eine Aufschlämmung zu erhalten,
- 6) eine Flüssigkeit/Feststoff-Trennung, die direkt an der Aufschlämmung oder an der mit einem begrenzten Faktor verdünnten Aufschlämmung ausgeführt wird, welche einen festen Reaktionsrest und ein die gewünschten Elemente enthaltendes Röstungsabwasser erzeugt,
- 7) die Abtrennung des Niobs und/oder Tantals aus dem Röstungsabwasser und die Wiederaufbereitung des Röstungsabwassers, aus welchem das Niob und Tantal vorher abgetrennt wurde/wurden, welches optional verdünnt ist, für die Durchführung der Laugung.

19. Verfahren nach einem der Ansprüche 1 bis 18, **dadurch gekennzeichnet, dass** es mit einem Erz oder Erzkonzentrat ausgeführt wird, wobei das betreffende Erz aus den Mineralien der Pyrochlor-, Euxenit-, Samarskit-, Perowskit- und Fergusonit-Gruppen und ihren Mischungen ausgewählt wird.

20. Verfahren für die Rückgewinnung mindestens eines aus Niob und Tantal ausgewählten Elements und mindestens eines anderen, aus Uran und den Seltenerdelementen ausgewählten Elements, vorteilhafterweise für die Rückgewinnung von Niob, Tantal, Uran und Seltenerdelementen, die in einem Erz oder einem Erzkonzentrat vorliegen, **dadurch gekennzeichnet, dass** es umfasst:
- die Auflösung der Elemente nach dem Verfahren nach einem der Ansprüche 1 bis 19, und
- die Abtrennung der Elemente.

## Revendications

1. Procédé de mise en solution d'au moins un élément choisi parmi le niobium et le tantale et d'au moins un autre élément choisi parmi l'uranium et les terres rares, avantageusement de mise en solution du niobium, du tantale, de l'uranium et des terres rares, contenus dans un minerai ou un concentré de minerai, **caractérisé en ce qu'**il comprend :
- le grillage d'un matériau, contenant lesdits éléments, mélangé, sec ou en présence d'eau, à un agent acide de grillage pour l'obtention d'un calciné ; ledit matériau consistant en ledit minerai ou concentré ou ayant été obtenu à partir dudit minerai ou dudit concentré et ledit agent acide de grillage assurant un grillage en milieu sulfate ; et
- la dissolution du calciné obtenu dans de l'eau pour l'obtention d'une pulpe dont la fraction liquide renferme du fer, à l'état ferrique, à une concentration d'au moins 50 g/L, avantageusement d'au moins 70 g/L, très avantageusement d'au moins 120 g/L.

2. Procédé selon la revendication 1, **caractérisé en ce que** le fer présent dans ladite pulpe était présent dans ledit calciné et/ou a été ajouté, au moins en partie, sous forme liquide et/ou solide, audit calciné.

3. Procédé selon la revendication 1 ou 2, **caractérisé en ce que** la dissolution du calciné est mise en oeuvre sans apport d'acide sulfurique.

4. Procédé selon l'une quelconque des revendications 1 à 3, **caractérisé en ce que** la dissolution du calciné est mise en oeuvre avec ajout d'un réducteur, tel que SO₂.

5. Procédé selon l'une quelconque des revendications 1 à 4, **caractérisé en ce que** le grillage, réaction liquide/solide, est un grillage acide.

6. Procédé selon l'une quelconque des revendications 1 à 4, **caractérisé en ce que** le grillage, réaction gaz/solide, est un grillage sulfatant.

7. Procédé selon l'une quelconque des revendications 1 à 6, **caractérisé en ce que** ledit grillage est mis en oeuvre en présence de fer, sous forme ferrique, avantageusement présent à un ratio molaire Fe/(Nb + Ta) supérieur à 2, très avantageusement supérieur à 3,5, de préférence supérieur à 6 ; ledit fer étant déjà présent dans le matériau à griller et/ou ayant été ajouté, au moins en partie, sous forme liquide et/ou solide, audit matériau à griller.

8. Procédé selon l'une quelconque des revendications 1 à 7, **caractérisé en ce que** le grillage est mis en oeuvre en présence de phosphate, avantageusement présent à un ratio molaire PO₄/ (Nb + Ta) supérieur à 2 et très avantageusement supérieur à 6 ; ledit phosphate étant déjà présent dans le matériau à griller et/ou ayant été ajouté, au moins en partie, sous forme liquide et/ou solide, audit matériau à griller.

9. Procédé selon l'une quelconque des revendications 1 à 8, **caractérisé en ce qu'**il comprend, en outre, en amont dudit grillage :
- un enrichissement physique et/ou un traitement chimique du minerai ou concentré.

10. Procédé selon l'une quelconque des revendications 1 à 9, **caractérisé en ce qu'**il comprend, en outre, en amont dudit grillage :
- une lixiviation acide, avantageusement une lixiviation atmosphérique acide en milieu sulfurique ; ladite lixiviation étant mise en oeuvre sur un minerai ou concentré, éventuellement enrichi physiquement.

11. Procédé selon la revendication 10, **caractérisé en ce qu'**il comprend en outre, en amont du grillage :
A) une lixiviation, en une seule étape, à co-courant en présence d'acide sulfurique, suivie d'une séparation solide/liquide qui produit un lixiviat et un résidu de lixiviation à griller ; ou
B) une lixiviation, en deux étapes, à contre-courant, comprenant une première étape de lixiviation, suivie d'une séparation solide/liquide qui produit un lixiviat et un premier résidu de lixiviation et une seconde étape de lixiviation, mise en oeuvre sur ledit résidu de lixiviation, en présence d'acide sulfurique suivie d'une séparation solide/liquide qui produit un second résidu de lixiviation à griller et un liquide avantageusement à recycler à ladite première étape de lixiviation.

12. Procédé selon la revendication 10 ou 11, **caractérisé en ce qu'**il comprend en outre, en amont du grillage :
A1) une lixiviation, en une seule étape, à co-courant, à un potentiel supérieur à 500 mV Ag/AgCl et avantageusement supérieur ou égal à 600 mV Ag/AgCl, en présence d'H₂SO₄ et éventuellement d'un appoint d'au moins un réducteur, suivie d'une séparation solide/liquide qui produit un lixiviat ferrique et un résidu de lixiviation à griller ;
A2) une lixiviation, en une seule étape, à co-courant, à un potentiel inférieur à 500 mV Ag/AgCl et avantageusement inférieur ou égal à 450 mV Ag/AgCl, en présence d'H₂SO₄ et d'au moins un réducteur, suivie d'une séparation solide/liquide qui produit un lixiviat ferreux, et un résidu de lixiviation enrichi en niobium et/ou tantale à griller ;
B1) une lixiviation, en deux étapes, à contre-courant, comprenant une première étape de lixiviation, à un potentiel supérieur à 500 mV Ag/AgCl et avantageusement supérieur ou égal à 600 mV Ag/AgCl , en présence d'H₂SO₄ et éventuellement d'un appoint d'au moins un réducteur, suivie d'une séparation solide/liquide qui produit un lixiviat ferrique et un premier résidu de lixiviation et une seconde étape de lixiviation mise en oeuvre sur ledit résidu de lixiviation, soit à un potentiel supérieur à 500 mV Ag/AgCl et avantageusement supérieur ou égal à 600 mV Ag/AgCl, en présence d'H₂SO₄ et éventuellement d'un appoint d'au moins un réducteur, soit à un potentiel inférieur à 500 mV Ag/AgCl et avantageusement inférieur ou égal à 450 mV Ag/AgCl, en présence d'H₂SO₄ et d'au moins un réducteur, suivie d'une séparation solide/liquide qui produit un second résidu de lixiviation à griller et un liquide avec acidité résiduelle avantageusement à recycler à ladite première étape de lixiviation ;
B2) une lixiviation, en deux étapes, à contre-courant, comprenant une première étape de lixiviation, à un potentiel inférieur à 500 mV Ag/AgCl et avantageusement inférieur à 450 mV Ag/AgCl, en présence d'H₂SO₄ et d'au moins un réducteur, suivie d'une séparation solide/liquide qui produit un lixiviat ferreux et un premier résidu de lixiviation et une seconde étape de lixiviation mise en oeuvre sur ledit premier résidu de lixiviation, soit à un potentiel supérieur à 500 mV Ag/AgCl et avantageusement supérieur ou égal à 600 mV Ag/AgCl, en présence d'H₂SO₄ et éventuellement d'un appoint d'au moins un réducteur, soit à un potentiel inférieur à 500 mV Ag/AgCl et avantageusement inférieur ou égal à 450 mV Ag/AgCl, en présence d'H₂SO₄ et d'au moins un réducteur, suivie d'une séparation solide/liquide qui produit un second résidu de lixiviation enrichi en niobium et/ou tantale à griller et un liquide avantageusement à recycler à ladite première étape de lixiviation ; ledit liquide avantageusement recyclé étant recyclé en l'état ou après séparation, au moins partielle, du niobium et/ou tantale qu'il renfermait.

13. Procédé selon la revendication 12, **caractérisé en ce que** ladite lixiviation est de type A2) ou B2), avantageusement de type B2).

14. Procédé selon l'une quelconque des revendications 1 à 13, **caractérisé en ce qu'**il comprend, en outre, en amont dudit grillage :
- un broyage ultra-fin du matériau à griller pour la production dudit matériau à une granulométrie ≤ 30 µm, avantageusement ≤ 15 µm, très avantageusement ≤ 10 µm.

15. Procédé selon l'une quelconque des revendications 1 à 14, **caractérisé en ce qu'**il comprend, en outre, en aval de ladite dissolution :
- une séparation solide/liquide mise en oeuvre directement sur la pulpe ou, après une étape additionnelle de dilution de ladite pulpe, par un facteur limité, avantageusement ≤ 5, pour éviter la précipitation des éléments mis en solution ; ladite séparation solide/liquide produisant un résidu d'attaque solide et un lixiviat de grillage renfermant lesdits éléments mis en solution.

16. Procédé selon la revendication 15, **caractérisé en ce qu'**il comprend en outre, en aval de ladite dissolution :
- la séparation du niobium et/ou du tantale dudit lixiviat de grillage et avantageusement le recyclage dudit lixiviat épuré desdits niobium et/ou tantale, éventuellement dilué, pour la mise en oeuvre d'une lixiviation atmosphérique acide en milieu sulfurique selon l'une quelconque des revendications 10 à 13.

17. Procédé selon l'une quelconque des revendications 11 à 16, **caractérisé en ce qu'**il comprend :
- une lixiviation de type A1, A2, B1 ou B2 selon la revendication 12 et la récupération d'un lixiviat et d'un résidu de lixiviation ;
- un éventuel broyage ultra-fin dudit résidu de lixiviation ;
- le grillage dudit résidu de lixiviation éventuellement broyé ;
- la dissolution du calciné obtenu à l'issue dudit grillage pour l'obtention d'une pulpe ;
- une séparation liquide/solide, mise en oeuvre directement sur ladite pulpe ou sur ladite pulpe diluée par un facteur limité qui produit un résidu d'attaque solide et un lixiviat de grillage renfermant les éléments recherchés,
- la séparation du niobium et/ou du tantale dudit lixiviat de grillage et le recyclage dudit lixiviat épuré desdits niobium et/ou tantale, éventuellement dilué, pour la mise en oeuvre de ladite lixiviation.

18. Procédé selon l'une quelconque des revendications 11 à 16, **caractérisé en ce qu'**il comprend :
1) le déschlammage d'un minerai ou concentré de minerai, éventuellement enrichi physiquement, pour la récupération d'une part de schlamms renfermant du fer et d'autre part dudit minerai ou concentré déschlammé ;
2) une lixiviation de type A1, A2, B1 ou B2 selon la revendication 12 mise en oeuvre sur ledit minerai ou concentré déschlammé, éventuellement additionné d'une partie des schlamms récupérés à l'étape 1 ci-dessus et la récupération d'un lixiviat et d'un résidu de lixiviation ;
3) un éventuel broyage ultra-fin du résidu de lixiviation ;
4) le grillage dudit résidu de lixiviation éventuellement broyé, mis en oeuvre avec apport de fer, *via* une autre partie des schlamms récupérés à l'étape 1 ci-dessus ;
5) la dissolution du calciné obtenu à l'issue dudit grillage pour l'obtention d'une pulpe ;
6) une séparation liquide/solide, mise en oeuvre directement sur ladite pulpe ou sur ladite pulpe diluée par un facteur limité, qui produit un résidu d'attaque et un lixiviat de grillage renfermant les éléments recherchés ;
7) la séparation du niobium et/ou du tantale dudit lixiviat de grillage et le recyclage dudit lixiviat de grillage épuré desdits niobium et tantale, éventuellement dilué, pour la mise en oeuvre de ladite lixiviation.

19. Procédé selon l'une quelconque des revendications 1 à 18, **caractérisé en ce qu'**il est mis en oeuvre avec un minerai ou concentré de minerai ; le minerai en cause étant choisi parmi les minéraux des groupes pyrochlore, euxenite, samarskite, perovskite, fergusonite et leurs mélanges.

20. Procédé de récupération d'au moins un élément choisi parmi le niobium et le tantale et d'au moins un autre élément choisi parmi l'uranium et les terres rares, avantageusement de récupération du niobium, du tantale, de l'uranium et des terres rares, contenus dans un minerai ou un concentré de minerai, **caractérisé en ce qu'**il comprend :
- la mise en solution desdits éléments selon l'une quelconque des revendications 1 à 19 ; et
- la séparation desdits éléments.
